# EUROPÄISCHE PATENTANMELDUNG

(11) **EP 3 246 263 A2**
(43) Veröffentlichungstag der Anmeldung: **22.11.2017**
(21) Anmeldenummer: 17000389.1
(22) Anmeldetag: 03.01.2013
(51) Int. Cl.: B65D 13/02, C12H 1/22, B65D 85/72

(54) **VERFAHREN ZUR HERSTELLUNG UND/ODER LAGERUNG EINER ZUM TRINKKONSUM VORGESEHENEN FLÜSSIGKEIT, ZU DESSEN DURCHFÜHRUNG VORGESEHENER FLÜSSIGKEITSBEHÄLTER, UND VERWENDUNG DES BEHÄLTERS IN DEM VERFAHREN**

(62) Teilanmeldung aus: 13703129.0
(71) Anmelder: Bauer, Alois, 94036 Passau (DE)
(72) Erfinder: Bauer, Alois, 94036 Passau (DE)
(74) Vertreter: Klauer, Stephan

(57) **Zusammenfassung**

Ein Verfahren zur Herstellung und/oder Lagerung einer trinkbaren Flüssigkeit oder eines Vorprodukts dafür umfasst die folgenden Schritte: (i) Bereitstellen eines geeignten Flüssigkeitsbehälters (10), der einen einseitig offenen Behälter (12) mit einer Innenwandoberfläche (16) umfasst, die zumindest teilweise als eine Oberfläche eines massiven Natursteins (18) ausgebildet ist; (ii) Abkühlen von zumindest einem Teilbereich des Flüssigkeitsbehälters bezüglich der Umgebungstemperatur; (iii) Einfüllen einer Flüssigkeit in den Flüssigkeitsbehälter; und (iv) Initiieren eines Schritts einer chemischen und/oder biochemischen Umwandlung der eingefüllten Flüssigkeit, wie etwa eine Fermentation oder eine Vergärung, zum Erzeugen der Flüssigkeit oder eines Vorprodukts, wobei während der Umwandlung keine weiteren Maßnahmen bzw. Prozesse zur Kühlung des Flüssigkeitsbehälters und der darin befindlichen Flüssigkeit durchgeführt werden.

## Beschreibung

Die Erfindung bezieht sich auf ein Verfahren zur Herstellung und/oder Lagerung einer zum Trinkkonsum vorgesehenen Flüssigkeit, einen Flüssigkeitsbehälter, der zur Durchführung des Verfahrens vorgesehen ist, und eine Verwendung desselben in dem Verfahren.

### Stand der Technik

Es sind Verfahren und Flüssigkeitsbehälter zur Herstellung und/oder Lagerung von zum Trinkkonsum vorgesehenen Flüssigkeiten, insbesondere alkoholhaltigen Getränken, wie etwa Bier, Wein, Fruchtwein, Whisky, Schnaps, fermentierten Getränken, wie z.B. Bionade® oder Kombutcha®, Mischgetränken, wie etwa Saftschorlen oder mit weiteren Geschmacksstoffen geschmacklich veränderte Biere, bekannt. Bekannte Flüssigkeitsbehälter, wie etwa Fässer, sind typischerweise aus einem der folgenden Materialen bzw. Werkstoffe hergestellt: Holz, Stahl (insbesondere Edelstahl), Kunststoff oder Beton. Bei einem traditionellen Verfahren zur Herstellung von Wein werden auch Amphoren aus gebranntem Ton (z.B. Terrakotta) bzw. Steingut verwendet.

Bei der Herstellung von alkoholhaltigen Getränken wird in eine in einem Flüssigkeitsbehälter bereitgestellte, zuckerhaltige Flüssigkeit, wie etwa Traubensaft oder Fruchtsaft, der Fruchtzucker enthält, eine Hefe bzw. Hefepilzkultur eingemischt und dadurch die Vergärung des Trauben- oder Fruchtsafts zu Traubenwein (Wein) oder Fruchtwein initiiert. Bei der Vergärung wird der Fruchtzucker in einer exothermen Reaktion, bei der Wärme entsteht, teilweise in Alkohol, überwiegend in Äthanol, umgesetzt. Je nach dem Fassungsvermögen des Flüssigkeitsbehälters und dem Material, aus dem er hergestellt ist, kann es erforderlich sein, die entstehende Wärme durch eine zusätzliche externe Kühlung, bei der eine strömende Kühlflüssigkeit, wie z.B. Wasser, mit einer Wand des Behälters in Kontakt gebracht wird, abzuführen. Dies gilt häufig insbesondere für Flüssigkeitsbehälter, die aus Kunststoff hergestellt sind, damit der Kunststoff nicht durch die Wärmeeinwirkung weich wird.

Die zuckerhaltige Flüssigkeit, wie etwa der Trauben- oder Fruchtsaft, kann auch eine Säure, wie etwa Fruchtsäure enthalten. Daher muss das Material, aus dem der Flüssigkeitsbehälter hergestellt ist, so ausgewählt oder bearbeitet sein, dass seine mit der Flüssigkeit in Kontakt kommende Oberfläche säurebeständig ist. In dieser Hinsicht ist es z.B. bei der Weinherstellung in Fässern aus Beton, wie sie zunehmend etwa in Frankreich verwendet werden, nachteilig, dass Beton Kalk enthält, der sich durch die Einwirkung der Fruchtsäure teilweise löst, zu einem Teil in die Flüssigkeit übergeht und sich zu einem anderen Teil auf der Innenwandoberfläche des Betonfasses niederschlägt. Daher werden Betonfässer vor dem Befüllen mit Traubensaft mit Zitronensäure gereinigt, um die ausgefallenen Kalkrückstände zu entfernen.

Bei in der Weinherstellung und -lagerung traditionell verwendeten Fässern aus Holz ist zum einen nachteilig, dass die Fässer nach ca. fünf bis sieben Weinherstellungszyklen entweder ersetzt werden müssen, weil die Innenoberfläche aus Holz angegriffen worden ist, oder getoastet (einer Wärmebehandlung unterzogen) werden müssen, um die Oberfläche wieder prozesstauglich zu machen bzw. zu regenerieren. Zum anderen ist die Konservierung von nicht mit Wein gefüllten Holzfässern problematisch und erfordert zusätzliche Maßnahmen, wie etwa das Anreichern der in einem Fass enthaltenen Luft mit Schwefel (sogenanntes Trockenkonservieren) oder das Einfüllen von Schwefelwasser in das Fass (sogenanntes Nasskonservieren).

Kenner bzw. Winzer wissen, dass es bei der Weinherstellung in Fässern aus Edelstahl schwierig ist, "große" Weine zu produzieren, weil Edelstahl unter den bisher üblichen Materialien (Holz, Edelstahl, Kunststoff, Beton) zum Herstellen der Fässer am neutralsten ist und aufgrund der relativ glatten Innenoberfläche nur relativ wenig Gasaustausch mit der eingefüllten Flüssigkeit (Traubensaft) stattfinden kann.

Angesichts der zuvor erwähnten Nachteile der bekannten Materialien zum Herstellen von Flüssigkeitsbehältern, wie etwa Fässern, sowie bei den Verfahren für die Herstellung und/oder Lagerung von zum Trinkkonsum vorgesehenen Flüssigkeiten (Getränken), insbesondere von Wein, richtet sich die vorliegende Erfindung darauf, die bekannten Nachteile zu vermeiden oder zumindest zu verringern.

Insbesondere ist es eine Aufgabe der vorliegenden Erfindung, ein Verfahren und einen Flüssigkeitsbehälter zum Herstellen und/oder Lagern von zum Trinkkonsum vorgesehenen, insbesondere alkoholhaltigen, Flüssigkeiten bereitzustellen, wobei der Behälter weitgehend unbegrenzt wieder verwendbar und leicht konservierbar ist und an seiner Innenwandung eine raue Oberflächenstruktur aufweist, die in dem Verfahren einen intensiven Gasaustausch mit der herzustellenden Flüssigkeit und eine vollständigere chemische Umsetzung bei nur begrenzter Zufuhr von die Umsetzung initiierenden bzw. fördernden Zusatzstoffen ermöglicht.

### Offenbarung der Erfindung

Gemäß einem ersten Aspekt der Erfindung wird ein Verfahren zur Herstellung und/oder Lagerung einer zum Trinkkonsum vorgesehenen Flüssigkeit oder eines Vorprodukts für eine derartige Flüssigkeit bereitgestellt. Das Verfahren umfasst die folgenden Schritte:
(i) Bereitstellen eines Flüssigkeitsbehälter, der zur Herstellung und/oder Lagerung von zum Trinkkonsum vorgesehenen Flüssigkeiten vorgesehen ist, der einen an einer Seite offenen Behälter mit einer Behälterwandung mit einer Innenwandoberfläche umfasst, wobei die Innenwandoberfläche zumindest teilweise als eine Oberfläche eines massiven Natursteins ausgebildet ist,
(ii) Abkühlen von zumindest einem Teilbereich des Flüssigkeitsbehälters in Bezug auf die Temperatur der umgebenden Luftatmosphäre,
(iii) Einfüllen einer Flüssigkeit in den gemäß Schritt (ii) abgekühlten Flüssigkeitsbehälter, und
(iv) Initiieren eines Schritts einer chemischen und/oder biochemischen Umwandlung der eingefüllten Flüssigkeit, wie etwa eine Fermentation oder eine Vergärung, zum Erzeugen der Flüssigkeit oder eines Vorprodukts, wobei während der Umwandlung keine weiteren Maßnahmen bzw. Prozesse zur Kühlung des Flüssigkeitsbehälters und/oder der sich in dem Flüssigkeitsbehälter befindenden Flüssigkeit ergriffen bzw. durchgeführt werden.

Das Verfahrens gemäß dem ersten Aspekt der Erfindung nutzt die relativ hohe Wärmekapazität (bzw. Kühlkapazität) des Materials Naturstein aus, was den Vorteil bewirkt, dass auf zusätzliche Maßnahmen für eine weitergehende Kühlung, wie etwa eine externe Kühlung mit Kühlwasser, verzichtet werden kann. Dabei kann das Abkühlen von selbst im Rahmen des Temperaturausgleichs mit der Umgebung in einer Räumlichkeit, die vor Sonnenlicht und Wärmeeinstrahlung abgeschottet ist, erfolgen. Insbesondere kann die Räumlichkeit zumindest teilweise unter der Erdoberfläche liegen, und etwa ein Weinkeller sein. Die Flüssigkeit kann dabei eine alkoholhaltige Flüssigkeit, wie etwa Wein, Fruchtwein oder andere aus dem Saft von Weintrauben oder Früchten herstellbare Getränke, Schnaps, Whisky, Bier oder ein Mischgetränk sein.

Gemäß einem zweiten Aspekt der Erfindung findet ein Flüssigkeitsbehälter, der zur Herstellung und/oder Lagerung von zum Trinkkonsum vorgesehenen Flüssigkeiten vorgesehen ist, der einen an einer Seite offenen Behälter mit einer Behälterwandung mit einer Innenwandoberfläche umfasst, wobei die Innenwandoberfläche zumindest teilweise als eine Oberfläche eines massiven Natursteins ausgebildet ist, Verwendung in einem Verfahren gemäß dem ersten Aspekt der Erfindung. Dabei kann die Flüssigkeit eine alkoholhaltige Flüssigkeit, wie etwa Wein, Fruchtwein oder andere aus dem Saft von Weintrauben oder Früchten herstellbare Getränke, Schnaps, Whisky, Bier oder ein Mischgetränk sein.

Die Verwendung gemäß dem sechsten Aspekt der Erfindung nutzt einerseits die vorteilhafte Oberflächenbeschaffenheit (Rauheit) des Materials Naturstein als Material der Innenwandoberfläche aus, die förderlich für die chemische Umsetzung und einen regen Gasaustausch mit der herzustellenden Flüssigkeit ist, und andererseits die relativ hohe Wärmekapazität (Kühlkapazität) von Naturstein, was ermöglicht, dass auf zusätzliche Maßnahmen für eine weitergehende Kühlung, wie etwa eine externe Kühlung mit Kühlwasser, verzichtet werden kann.

Gemäß einem dritten Aspekt der Erfindung wird ein Flüssigkeitsbehälter zur Herstellung und/oder Lagerung von zum Trinkkonsum vorgesehenen, insbesondere alkoholhaltigen, Flüssigkeiten bereitgestellt. Der Flüssigkeitsbehälter umfasst einen an einer, insbesondere oberen, Seite offenen Behälter mit einer Behälterwandung mit einer Innenwandoberfläche, wobei die Innenwandoberfläche zumindest teilweise, insbesondere im Wesentlichen vollständig, als eine Oberfläche eines massiven Natursteins ausgebildet ist. Des Weiteren wird der Flüssigkeitsbehälter in einem Verfahren gemäß dem ersten Aspekt der Erfindung verwendet. Insbesondere bei der Herstellung (Vergärung) von Wein wurde festgestellt, dass eine Natursteinoberfläche eine natürliche Rauheit mit einem Rauhigkeitsgrad aufweist, die/der einen intensiven Gasaustausch mit der herzustellenden Flüssigkeit und eine vollständige chemische Umsetzung bei begrenzter Zufuhr von die Umsetzung fördernden Zusatzstoffen ermöglicht, und bei der Weinherstellung die Entwicklung besonders fruchtiger Weine ermöglicht. Gleichzeitig ist eine Natursteinoberfläche widerstandfähig gegenüber einer Vielzahl von chemischen Stoffen, einschließlich Fruchtsäuren, so dass ein erfindungsgemäß ausgestalteter Flüssigkeitsbehälter im Wesentlichen unbegrenzt wieder verwendbar ist.

### Ausführungsformen der Erfindung

Zum Implementieren der Erfindung wird in einer Ausführungsform ein Verfahren zur Herstellung eines Flüssigkeitsbehälters zur Herstellung und/oder Lagerung von zum Trinkkonsum vorgesehenen, insbesondere alkoholhaltigen, Flüssigkeiten bereitgestellt. Dabei wird eine Innenwandoberfläche des Flüssigkeitsbehälters zumindest teilweise, insbesondere im Wesentlichen vollständig, als Oberfläche eines massiven Natursteins ausgebildet. Das Verfahren umfasst die folgenden Schritte:
(a) Bereitstellen eines Blocks aus einem massiven Naturstein, und
(b) mittels eines ersten Hohlbohrkernbohrers mit einem ersten Außendurchmesser, in dem Block Ausbohren einer im Wesentlichen zylinderförmigen ersten Innenwandoberfläche mit einem ersten Innendurchmesser, der nominal dem ersten Außendurchmesser des Hohlbohrkernbohrers entspricht, wobei die erste Innenwandoberfläche direkt oder gegebenenfalls nach Ausführen eines Oberflächenbearbeitungsschritts als Innenwandoberfläche eines ersten Mantelabschnitts eines ersten Flüssigkeitsbehälters vorgesehen ist.

Ein Vorteil des vorgenannten Herstellungsverfahrens ist, dass mit im Wesentlichen nur einem Arbeitsschritt, nämlich dem des Ausbohrens mittels eines Hohlkernbohrers, ein verwendbarer Mantelabschnitt für einen erfindungsgemäßen Flüssigkeitsbehälter hergestellt wird. Ein weiterer Vorteil dieses Verfahrens ist, dass im Schritt (b) ferner ein im Wesentlichen zylinderförmiger Bohrkern aus massivem Naturstein erzeugt wird, aus dem in Material sparender Weise in einem weiteren Arbeitsschritt des Ausbohrens mittels eines zweiten Hohlbohrkernbohrers mit einem zweiten Außendurchmesser, der kleiner als der erste Außendurchmesser des ersten Hohlbohrkernbohrers ist, ein weiterer, in diesem Fall zylinderwandförmiger Mantelabschnitt für einen zweiten erfindungsgemäßen Flüssigkeitsbehälter hergestellt werden kann.

In dem vorgenannten Herstellungsverfahren wird im Schritt (b) ein im Wesentlichen zylinderförmiger Bohrkern aus massivem Naturstein mit einem ersten Außendurchmesser erzeugt, wobei der erste Außendurchmesser nominal einem Innendurchmesser des ersten Hohlbohrkernbohrers entspricht. Das Herstellungsverfahren Aspekt kann ferner den folgenden Schritt umfassen:
(d) in den im Schritt (b) erhaltenen, im Wesentlichen zylinderförmigen Bohrkern aus massivem Naturstein, mittels eines zweiten Hohlbohrkernbohrers mit einem zweiten Außendurchmesser, der um einen vorbestimmten Wert kleiner als der erste Außendurchmesser ist, und koaxial zu der im Schritt (b) durchgeführten Ausbohrung, Ausbohren einer im Wesentlichen zylinderförmigen zweiten Innenwandoberfläche mit einem zweiten Innendurchmesser, so dass ein als Mantelabschnitt eines zweiten Flüssigkeitsbehälters verwendbarer Zylindermantel aus massivem Naturstein entsteht, dessen zweite Innenwandoberfläche direkt oder gegebenenfalls nach Ausführen eines Oberflächenbearbeitungsschritts als Innenwandoberfläche des Mantelabschnitts des zweiten Flüssigkeitsbehälters vorgesehen ist. So kann in Material und Aufwand sparender Weise ein weiterer, hier zylinderwandförmiger Mantelabschnitt für einen zweiten erfindungsgemäßen Flüssigkeitsbehälter hergestellt werden.

Zum Implementieren der Erfindung wird in einer weiteren Ausführungsform ein Verfahren zur Herstellung eines Flüssigkeitsbehälters zur Herstellung und/oder Lagerung von zum Trinkkonsum vorgesehenen, insbesondere alkoholhaltigen, Flüssigkeiten bereitgestellt. Dabei wird eine Innenwandoberfläche des Flüssigkeitsbehälters zumindest teilweise, insbesondere im Wesentlichen vollständig, als Oberfläche eines massiven Natursteins ausgebildet. Das Verfahren umfasst die folgenden Schritte:
(A) Bereitstellen eines Blocks aus einem massiven Naturstein, der zumindest in einem Teilbereich im Wesentlichen plattenförmig ausgebildet ist und zwei im Wesentlichen parallel zueinander angeordnete Plattenoberflächen aufweist,
(B) aus dem plattenförmigen Teilbereich, Austrennen von mindestens zwei Längsabschnitten, die jeweils zwei Längsseitenflächen aufweisen, wobei die Längsseitenfläche in Bezug auf eine der Plattenoberflächen entweder einen rechten Winkel bilden oder, um zu ermöglichen, dass die mindestens zwei Längsabschnitte auf Gehrung aneinander angrenzend angeordnet werden können, einen spitzen Winkel bilden und in Bezug auf die eine der Plattenoberflächen zueinander geneigt sind, und
(C) Anordnen von drei oder mehr Längsabschnitten, die aus den Schritten (A) und (B) erhalten worden sind, zu einem Hohlkörper, so dass innenseitig des Hohlkörpers angeordnete Plattenoberflächen der Längsabschnitte als Innenwandoberfläche eines Mantelabschnitts des Flüssigkeitsbehälters vorgesehen sind.

Ein Vorteil des vorgenannten, weiteren Herstellungsverfahrens ist, dass es von einem plattenförmigen Block aus Naturstein ausgeht, der im Wesentlichen nur die gewünschte Dicke der Längsabschnitte des Mantelabschnitts des Flüssigkeitsbehälters aufweisen muss, während als Ausgangsobjekt für das Verfahrens gemäß dem zweiten Aspekt der Erfindung ein Block aus Naturstein erforderlich ist, der mindestens eine Dicke aufweisen muss, die in etwa dem Durchmesser des Mantelabschnitts des Flüssigkeitsbehälters entspricht. Derartige plattenförmige Blöcke aus Naturstein sind in der Natur häufiger zu finden bzw. lassen sich leichter vom Steinbruch zur Bearbeitungsstätte transportieren.

Zum Implementieren der Erfindung wird in einer noch weiteren Ausführungsform ein Verfahren zur Herstellung eines Behälters oder eines Mantelabschnitts für einen Behälter eines Flüssigkeitsbehälters zur Herstellung und/oder Lagerung von zum Trinkkonsum vorgesehenen, insbesondere alkoholhaltigen, Flüssigkeiten, bereitgestellt. Dabei wird eine Innenwandoberfläche des Mantelabschnitts oder des Behälters zumindest teilweise, insbesondere im Wesentlichen vollständig, als Oberfläche eines massiven Natursteins ausgebildet. Das Verfahren umfasst die folgenden Schritte:
(1) Bereitstellen eines Blocks mit einer im Wesentlichen zylinderförmigen Mantelinnenwandoberfläche oder mit einer Bodeninnenoberfläche und einer im Wesentlichen zylinderförmigen Mantelinnenwandoberfläche, als Trageschicht des Mantelabschnitts oder des Behälters, und
(2) im Wesentlichen flächendeckend Auskleiden der Mantelinnenwandoberfläche oder der Bodeninnenoberfläche und der Mantelinnenwandoberfläche mit plattenförmigen Deckschichtsegmenten, wie etwa Fliesen, die aus einem massiven Naturstein hergestellt worden sind, zum Herstellen des Mantelabschnitts oder des Behälters.

In dem Flüssigkeitsbehälter gemäß dem dritten Aspekt der Erfindung kann zumindest ein Abschnitt der Innenwandoberfläche (welcher Abschnitt aus massivem Naturstein hergestellt ist) zunächst mittels Spalten oder Bohren oder Sägen des Natursteins oder der Naturstein mit einem Sandstrahl behandelt worden sein und infolgedessen eine erste Rauigkeit aufgewiesen haben. Anschließend kann zumindest dieser Abschnitt der Innenwandoberfläche einer Oberflächenbehandlung unterzogen worden sein, die bewirkt hat, dass die Rauigkeit der behandelten Innenwandoberfläche in Bezug zu der zunächst mittels Spalten oder Sägen oder Bohren oder der Behandlung mit dem Sandstrahl hergestellten ersten Rauigkeit vergrößert worden ist.

In dem Flüssigkeitsbehälter gemäß dem dritten Aspekt der Erfindung kann die Innenwandoberfläche (insoweit sie aus massivem Naturstein hergestellt ist) eine durch Ausführen eines Oberflächenbearbeitungsschritts gestockte, scharrierte, gespitzte und/oder geflammte Oberfläche, umfassen. Der Naturstein kann Granit oder Basalt sein, und er sollte insbesondere kein kalkreicher Naturstein, wie etwa Marmor, sein.

Der Flüssigkeitsbehälter kann einen Deckel zum Abdecken der offenen Seite des Behälters umfassen. Dabei kann der Deckel eine als Deckelabschnitt der Innenwandoberfläche des Flüssigkeitsbehälters vorgesehene Deckeloberfläche haben, die im Wesentlichen vollständig als eine Oberfläche eines massiven Natursteins ausgebildet ist. Das Vorsehen eines Deckels verhindert das ungewollte Eindringen bzw. Hineinfallen von Fremdkörpern in die herzustellende Flüssigkeit. Wenn die Innenwandoberfläche des Deckels ebenfalls aus Naturstein ausgebildet ist, kann der Flüssigkeitsbehälter bis an seinen oberen Rand gefüllt und damit seine Füllkapazität voll ausgenutzt werden, wobei die Flüssigkeitsoberfläche auch an der Innenwandoberfläche des Deckels mit dem Material Naturstein in Kontakt kommen kann.

Die Behälterwandung des Behälters kann einen Bodenabschnitt und einen Mantelabschnitt umfassen. Dabei kann der Mantelabschnitt in einer Umfangsrichtung und/oder in einer zu der offenen Seite des Behälters weisenden, z.B. axialen, Richtung in mindestens zwei aneinandergrenzende Mantelsegmente unterteilt sein. Dabei kann der Mantelabschnitt in einer zu seiner offenen Seite weisenden Richtung in mindestens zwei Mantelsegmente unterteilt sein. Alternativ oder zusätzlich dazu kann der Mantelabschnitt in einer Umfangsrichtung in mindestens zwei, vorzugsweise vier, sechs oder acht, Mantelsegmente unterteilt sein. Das Unterteilen des Mantelabschnitts in Mantelsegmente ermöglicht, dass Behälter mit großen Fassungsvermögen leicht aus mehreren Segmenten hergestellt werden können, ohne dass ein Natursteinblock mit einer Größe erforderlich ist, die ausreicht, um daraus einen einteiligen Behälter bzw. einen Mantelabschnitt eines Behälters herzustellen.

In einer Ausführungsform kann die Behälterwandung eine Trageschicht und eine an einer Innenseite der Trageschicht angeordnete Deckschicht umfassen. Dabei kann die Deckschicht mit der Trageschicht, insbesondere flächig, verbunden sein. Dabei kann die Deckschicht zumindest teilweise, vorzugsweise im Wesentlichen vollständig, z.B. als ein Monoblock, als eine Oberfläche eines massiven Natursteins ausgebildet sein. Wenn sie nicht als ein Monoblock aus einem massiven Naturstein ausgebildet ist, kann die Deckschicht der Behälterwandung in einer Umfangsrichtung und/oder in einer zu der offenen Seite des Behälters weisenden, z.B. axialen, Richtung in mindestens zwei aneinandergrenzende Deckschichtsegmente unterteilt sein. Diese Ausführungsform ist Material sparend, weil nur die Deckschicht aus Naturstein hergestellt ist, während die Tragschicht aus einem anderen Material hergestellt sein kann. Die Trageschicht kann aus Beton oder einem gießbaren und/oder formbaren, aushärtbaren Kunststein ausgebildet sein. Eine derartige Wahl des Materials der Tragschicht führt zu einer relativ hohen Wärmekapazität (Kühlkapazität) auch in der Tragschicht, die vergleichbar ist zu der Wärmekapazität von Naturstein, ohne dass (relativ teurer) Naturstein erforderlich ist.

Der Flüssigkeitsbehälter kann einen Deckel zum Abdecken der offenen Seite des Behälters umfassen, wobei der Deckel eine Deckeltrageschicht und eine an einer Innenseite der Deckeltrageschicht angeordnete Deckeldeckschicht umfasst. Dabei kann die Deckeldeckschicht mit der Deckeltrageschicht, insbesondere flächig, verbunden sein. Dabei kann die Deckeldeckschicht im Wesentlichen vollständig, insbesondere als ein Monoblock, aus einem massiven Naturstein hergestellt sein. Diese Ausführungsform ist Material sparend, weil nur die Deckeldeckschicht aus Naturstein hergestellt ist, während die Deckeltragschicht aus einem anderen Material hergestellt sein kann. Die Deckeltrageschicht kann aus Beton oder einem gießbaren und/oder formbaren, aushärtbaren Kunststein ausgebildet sein. Wie auch bei der Behälterwandung führt diese Materialwahl zu einer relativ hohen Wärmekapazität (Kühlkapazität) auch in der Deckeltragschicht, die vergleichbar ist zu der Wärmekapazität von Naturstein, ohne dass (relativ teurer) Naturstein erforderlich ist

Die Behälterwandung des Behälters kann einen Bodenabschnitt und einen Mantelabschnitt umfassen. Dabei kann der Mantelabschnitt im Wesentlichen vollständig, insbesondere als ein Monoblock, aus massivem Naturstein hergestellt sein. Dabei kann der Mantelabschnitt im Wesentlichen zylinderförmig sein. Der Bodenabschnitt kann im Wesentlichen plattenförmig und im Wesentlichen vollständig, insbesondere als ein Monoblock, aus massivem Naturstein hergestellt sein. So kann die gesamte Behälterwandung aus massivem Naturstein hergestellt sein. Eine derartige Ausgestaltung vermittelt einen natürlichen, wertvollen Eindruck, insbesondere bei Flüssigkeitsbehältern, die der Öffentlichkeit gezeigt werden. Ferner bewirkt diese Ausgestaltung eine relativ hohe Wärmekapazität (Kühlkapazität) des gesamten Behälters.

Alternativ oder zusätzlich dazu kann die Behälterwandung des Behälters im Wesentlichen vollständig, insbesondere als ein Monoblock, aus einem massiven Naturstein hergestellt sein. Diese Ausgestaltung vermittelt einen besonders wertvollen, urtümlichen Eindruck, insbesondere bei Flüssigkeitsbehältern, die der Öffentlichkeit gezeigt werden.

Der Flüssigkeitsbehälter kann einen Deckel umfassen, der im Wesentlichen vollständig, insbesondere als ein Monoblock, aus einem massiven Naturstein hergestellt ist. Auch diese Ausgestaltung vermittelt einen natürlichen, wertvollen Eindruck des Flüssigkeitsbehälters, insbesondere wenn dieser der Öffentlichkeit zur Schau gestellt wird. Ferner wird eine relativ hohe Wärmekapazität (Kühlkapazität) des Deckels erzielt.

Der Flüssigkeitsbehälter einen im Wesentlichen zylinderförmigen Mantelabschnitt umfasst, der im Wesentlichen vollständig aus massivem Naturstein hergestellt ist. Dieser Flüssigkeitsbehälter kann ferner einen im Wesentlichen plattenförmigen Bodenabschnitt umfassen, der im Wesentlichen vollständig aus massivem Naturstein hergestellt ist. Vorzugsweise kann dieser Flüssigkeitsbehälter ferner einen im Wesentlichen plattenförmigen Deckel umfasst, der ebenfalls im Wesentlichen vollständig aus massivem Naturstein hergestellt ist. Diese Ausgestaltung vermittelt einen besonders wertvollen, urtümlichen Eindruck des Flüssigkeitsbehälters, insbesondere wenn dieser der Öffentlichkeit zur Schau gestellt wird. Ferner wird eine relativ hohe Wärmekapazität (Kühlkapazität) des gesamten Flüssigkeitsbehälters erzielt.

Der Flüssigkeitsbehälter kann einen Bodenabschnitt und einen Mantelabschnitt umfassen. Dabei kann im Mantelabschnitt in einem vorbestimmten Abstand zu einem, insbesondere bodenseitigen, Ende des Mantelabschnitts ein verschließbarer und öffenbarer erster Flüssigkeitsauslass vorgesehen sein. Der erste Flüssigkeitsauslass, bei Weinfässern auch Klarauslass genannt, ermöglicht, fertig hergestellte Flüssigkeit zu entnehmen, wobei ein etwaiger Bodensatz, der eine Trübung der entnommenen Flüssigkeit bewirken würde, in dem Flüssigkeitsbehehälter verbleibt. Ferner kann vorgesehen sein, dass der Bodenabschnitt einen verschließbaren und öffenbaren zweiter Flüssigkeitsauslass umfasst. Der zweite Flüssigkeitsauslass kann in der Nähe einer oder an einer im Betrieb des Flüssigkeitsbehälters tiefsten Stelle des Bodenabschnitts vorgesehen sein. Der zweite Flüssigkeitsauslass dient zum Ablassen eines etwaigen Bodensatzes der in dem Behälter hergestellten Flüssigkeit und nach einer Reinigung zum vollständigen Ablassen einer Reinigungsflüssigkeit (eines Reinigungsmittels).

In dem Flüssigkeitsbehälter kann die Innenwandoberfläche rauer als eine durch eine Bearbeitung mit einem Sandstrahl behandelte Oberfläche sein. Insbesondere kann die Innenwandoberfläche eine durch Ausführen eines Oberflächenbearbeitungsschritts gestockte, scharrierte, gespitzte oder geflammte Oberfläche, umfassen. Es zeigt sich, dass es vorteilhaft ist, die Innenwandoberfläche aus Naturstein gerade nicht zu glätten, zu schleifen oder zu polieren, sondern in ihrer natürlichen Rauhigkeit, wie sie beim Spalten entsteht, oder der Rauhigkeit, wie sie beim Bohren oder Sägen entsteht, zu belassen, oder im Gegenteil, die entstandene Innenwandoberfläche in dem Oberflächenbearbeitungsschritt zusätzlich rauer zu gestalten.

Ein Fachmann, hier ein Steinmetz, weiß, dass beim sogenannten Stocken mit einem hammerartigen Werkzeug auf die Natursteinoberfläche geschlagen wird, so dass einzelne Steinplättchen bzw. Steinsplitter abspringen und eine rauere Oberfläche mit Unebenheiten in der Größenordnung (Abmessung) von einem oder mehreren Zentimetern entstehen. Beim sogenannten Scharrieren wird mit einem speziellen, mit einem Werkzeugkopf versehenen Werkzeug auf die Natursteinoberfläche geschlagen, wobei der Werkzeugkopf an seiner Schlagseite mehrere Vorsprünge aufweist, die das Absplittern von Steinplättchen bzw. Steinsplittern bewirkt. Beim sogenannten Spitzen wird mit einem speziellen, mit einer Schlagspitze versehenen Werkzeug auf die Natursteinoberfläche geschlagen, um das Absplittern von Steinplättchen bzw. Steinsplittern zu bewirken. Beim sogenannten Flammen wird die Oberfläche mit einer heißen Feuerflamme, etwa aus einem Thermobrenner bzw. oder einem Schneidbrenner, behandelt, so dass aufgrund der entstehenden thermomechanischen Spannung Steinpartikel, Steinplättchen bzw. Steinsplitter von der Oberfläche absplittern. Das Vergrößern der Rauhigkeit kann eine Intensivierung des Gasaustauschs mit der Flüssigkeit bewirken und eine chemische Umsetzung fördern.

Ein Bodenabschnitt kann aus einem massiven Naturstein hergestellt sein und eine Dicke von mehr als 10 cm, bevorzugt mehr als 12 cm und noch mehr bevorzugt mehr als 15 cm aufweisen. Eine derartige Wahl der Dicke der Bodenplatte ist vorteilhaft zum Erzielen einer großen Wärmekapazität (Kühlkapazität) aufgrund der Bodenplatte.

Ein Mantelabschnitt kann aus einem massiven Naturstein hergestellt sein und eine Dicke von mehr als 8 cm, bevorzugt mehr als 10 cm, mehr bevorzugt mehr als 12 cm und noch mehr bevorzugt mehr als 15 cm aufweisen. Eine derartige Wahl der Dicke des Mantelabschnitts ist vorteilhaft zum Erzielen einer großen Wärmekapazität (Kühlkapazität) aufgrund des Mantelabschnitts.

Der Naturstein kann Granit einschließlich etwa Paragneis, Orthogneis oder Syenit, oder Basalt sein. Der Naturstein ist jedenfalls kein kalkreicher Naturstein, wie etwa Marmor. Diese Materialwahl bewirkt, dass der Naturstein besonders widerstandsfähig gegenüber Säure (auch Fruchtsäure) enthaltenden Flüssigkeiten ist.

Das zur Implementierung der Erfindung in der einen Ausführungsform bereitgestellte Verfahren zum Herstellen des Flüssigkeitsbehälters kann ferner den folgenden Schritt umfassen:
(c) Bereitstellen eines Bodenabschnitts aus massivem Naturstein mit einer im Wesentlichen ebenen Oberfläche, die direkt oder gegebenenfalls nach Ausführen eines Oberflächenbearbeitungsschritts als Bodenabschnitt der Innenwandoberfläche des ersten Flüssigkeitsbehälters vorgesehen ist.
Vorzugsweise wird auch ein Deckelabschnitt aus massivem Naturstein mit einer im Wesentlichen ebenen Oberfläche, die direkt oder gegebenenfalls nach Ausführen eines Oberflächenbearbeitungsschritts als Deckelabschnitt der Innenwandoberfläche des Flüssigkeitsbehälters vorgesehen ist, bereitgestellt. Auf diese Weise erhält man einen Flüssigkeitsbehälter, der im Wesentlichen vollständig aus Naturstein hergestellt ist, was einen wertvollen Eindruck vermittelt und vorteilhaft im Hinblick auf die Wärmekapazität (Kühlkapazität) der Behälterwandung des Flüssigkeitsbehälters ist.

Das vorgenannte Verfahren kann noch ferner den folgenden Schritt umfassen:
(e) in den im Schritt (d) erhaltenen, im Wesentlichen zylinderförmigen Bohrkern aus massivem Naturstein, mittels eines dritten Hohlbohrkernbohrers mit einem dritten Außendurchmesser, der um einen vorbestimmten Wert kleiner als der zweite Außendurchmesser ist, und koaxial zu den in den Schritten b) und d) durchgeführten Ausbohrungen, Ausbohren einer im Wesentlichen zylinderförmigen dritten Innenwandoberfläche mit einem dritten Innendurchmesser, so dass ein als Mantelabschnitt eines dritten Flüssigkeitsbehälters verwendbarer Zylindermantel aus massivem Naturstein entsteht, dessen dritte Innenwandoberfläche direkt oder gegebenenfalls nach Ausführen eines Oberflächenbearbeitungsschritts als Innenwandoberfläche des Mantelabschnitts des dritten Flüssigkeitsbehälters vorgesehen ist. So kann in Material und Aufwand sparender Weise ein noch weiterer, hier zylinderwandförmiger Mantelabschnitt für einen dritten erfindungsgemäßen Flüssigkeitsbehälter hergestellt werden.

Das zur Implementierung der Erfindung in der weiteren Ausführungsform bereitgestellte Verfahren zum Herstellen des Flüssigkeitsbehälters kann ferner den folgenden Schritt umfassen:
(D) Umgießen oder Umspritzen des im Schritt (C) erhaltenen Hohlkörpers mit Beton oder mit einem gießbaren und/oder formbaren, aushärtbaren Kunststein, und Aushärtenlassen des Betons oder Kunststeins, so dass eine äußere Mantelfläche des im Schritt (C) erhaltenen Hohlkörpers im Wesentlichen vollständig mit ausgehärtetem Beton oder mit ausgehärtetem Kunststein bedeckt ist, um den Mantelabschnitt herzustellen. Durch das Umgießen oder Umspritzen des im Schritt (C) erhaltenen, d.h. aus Längsabschnitten erhaltenen Hohlkörpers mit Beton oder mit einem aushärtbaren Kunststein wird eine Tragschicht hergestellt, die die Längsabschnitte abstützt bzw. trägt und den gesamten Behälter verfestigt bzw. stabilisiert.

Das vorgenannte Verfahren kann noch ferner den folgenden Schritt umfassen:
(E) Bereitstellen eines als Bodenplatte ausgebildeten Bodenabschnitts, von dem zumindest eine als Innenwandoberfläche vorgesehene Seite im Wesentlichen vollständig als Oberfläche eines massiven Natursteins ausgebildet ist, und
(F) flüssigkeitsdicht Verbinden des Bodenabschnitts mit einem Endbereich des im Schritt (C) oder im Schritt (D) erhaltenen Hohlkörpers, so dass ein an dem anderen Endbereich des Hohlkörpers offener Behälter entsteht.

So wird ein im Wesentlichen vollständig aus massivem Naturstein bestehender Behälter hergestellt, was einen wertvollen, urtümlichen Eindruck vermittelt und vorteilhaft im Hinblick auf das Erzielen einer hohen Wärmekapazität (Kühlkapazität) der Behälterwandung ist.

Das zur Implementierung der Erfindung in der noch weiteren Ausführungsform bereitgestellte Verfahren zum Herstellen des Flüssigkeitsbehälters kann noch ferner den folgenden Schritt umfassen:
(G) Bereitstellen eines Deckels, von dem zumindest eine als Innenwandoberfläche vorgesehene Seite im Wesentlichen vollständig als Oberfläche eines massiven Natursteins ausgebildet ist, und
(H) lösbar und flüssigkeitsdicht Verbinden des Deckels mit dem offenen Endbereich des im Schritt (C) oder im Schritt (D) erhaltenen Hohlkörpers, so dass ein an dem anderen Endbereich des Hohlkörpers mittels des Deckels verschlossener, öffenbarer und wieder verschließbarer Flüssigkeitsbehälter entsteht.
So wird ein im Wesentlichen vollständig aus massivem Naturstein bestehender Behälter mit Deckel hergestellt, mit den gleichen bzw. verstärkten Vorteilen des aus den Schritten (E) und (F) resultierenden Behälters.

In dem zur Implementierung der Erfindung in der einen und der weiteren Ausführungsform bereitgestellte Verfahren zur Herstellung eines Flüssigkeitsbehälters, d.h. in dem erst- und dem zweitgenannten Herstellungsverfahren, kann die als Innenwandoberfläche vorgesehene Oberfläche des Natursteins einer Oberflächenbearbeitung unterzogen werden, die die Rauhigkeit der Oberfläche und/oder die spezifische Oberfläche der Oberfläche vergrößert. Die Oberflächenbearbeitung kann insbesondere ein Stocken, Scharrieren oder Spitzen umfassen. Wie bereits erwähnt, sind Stocken, Scharrieren oder Spitzen dem Fachmann, hier einem Steinmetz, bekannte Oberflächenbearbeitungstechniken, die dazu dienen, die Rauhigkeit der Oberfläche zu vergrößern. Das Vergrößern der Rauhigkeit kann eine Intensivierung des Gasaustauschs mit der Flüssigkeit bewirken und eine chemische Umsetzung fördern.

In dem zur Implementierung der Erfindung in der noch weiteren Ausführungsform bereitgestellte Verfahren zur Herstellung eines Flüssigkeitsbehälters, d.h. in dem drittgenannten Herstellungsverfahren, kann der Block aus Beton oder einem ausgehärteten Kunststein hergestellt worden sein. Ferner kann mittels des Verfahrens ein Mantelabschnitt für einen Behälter hergestellt werden, wobei der Block im Wesentlichen rohrförmig bereitgestellt wird. Als ein derartiger rohrförmiger Block kann z.B. ein Rohrabschnitt für eine Abwasserleitung bereitgestellt werden.

In dem Verfahren gemäß dem ersten Aspekt der Erfindung kann im Schritt (ii) das Abkühlen in den Temperaturbereich von 6°C bis 12°C, bevorzugt in den Temperaturbereich von 8°C bis 10°C, erfolgen. Die genannten Temperaturen sind in Räumlichkeiten anzutreffen, die vor Sonnenlicht und Wärmeeinstrahlung abgeschottet sind und ggf. teilweise unter der Erdoberfläche liegen, wie etwa in Weinkellern, so dass das Abkühlen von zumindest dem Teilbereich des Flüssigkeitsbehälters in die genannten Temperaturbereiche von selbst im Rahmen des Temperaturausgleichs mit der Umgebung erzielt wird.

In dem Verfahren gemäß dem ersten Aspekt der Erfindung kann der Flüssigkeitsbehälter einen Mantelabschnitt und einen Bodenabschnitt umfassen, und das Abkühlen kann ein Abkühlen von zumindest einem Teilbereich von dem Mantelabschnitt und dem Bodenabschnitt umfassen. In diesem Verfahren kann der Flüssigkeitsbehälter ferner einen Deckel umfassen, und das Abkühlen kann ferner ein Abkühlen von zumindest einem Teilbereich des Deckels umfassen.

Das Verfahren gemäß dem ersten Aspekt der Erfindung kann ferner den folgenden Schritt umfassen:
(v) in dem Flüssigkeitsbehälter, mit einem im Schritt (iv) erhaltenen Vorprodukt, Initiieren, Durchführen und/oder Abwarten von weiteren Verarbeitungs- und oder Bearbeitungsschritten, wie etwa ein Reifungsprozess, zum Erzeugen der zum Trinkkonsum vorgesehenen Flüssigkeit.
Weitere Verarbeitungsschritte können das Beimischen weiterer Substanzen zum gezielten Einstellen von Eigenschaften der hergestellten bzw. herzustellenden Flüssigkeit, und/oder das Mischen mit anderen Flüssigkeiten zum Herstellen von Mischgetränken umfassen. So lassen sich mit dem erfindungsgemäßen Verfahren vielfältige Flüssigkeiten herstellen.

### Kurze Beschreibung der Figuren

Ausführungsformen der Erfindung und Ausführungsformen zum Implementieren der Erfindung werden im Folgenden beispielhaft anhand der beigefügten Figuren in weiteren Einzelheiten beschrieben. Es zeigen:
Fig. 1A eine schematische perspektivische Ansicht eines Behälters eines Flüssigkeitsbehälters gemäß einer ersten Ausführungsform,
Fig. 1B eine schematische Querschnittansicht des Flüssigkeitsbehälters aus der Fig. 1A geschnitten in der Ebene A-A der Fig. 1A, wobei der Flüssigkeitsbehälter zusätzlich mit einem Deckel versehen ist,
Fig. 2A eine schematische perspektivische Ansicht eines Behälters eines Flüssigkeitsbehälters gemäß einer zweiten Ausführungsform, wobei der Flüssigkeitsbehälter einen zylinderförmigen Mantelabschnitt, einen scheibenförmigen Bodenabschnitt und einen scheibenförmigen Deckelabschnitt gemäß einer ersten Variante umfasst,
Fig. 2B eine schematische Querschnittansicht des Flüssigkeitsbehälters aus der Fig. 2A geschnitten in der Ebene B-B der Fig. 2A, wobei der Mantelabschnitt mit einem ersten Flüssigkeitsauslass und der Bodenabschnitt mit einem zweiten Flüssigkeitsauslass versehen ist,
Fig. 2C eine schematische Querschnittansicht eines Deckelabschnitts gemäß einer zweiten Variante, des Flüssigkeitsbehälters aus der Fig. 2A, geschnitten in der Ebene B-B der Fig. 2A,
Fig. 3 eine schematische Aufsicht auf einen Block aus einem massivem Naturstein, aus dem sukzessive mittels verschiedener Hohlbohrkernbohrer ein Mantelabschnitt und mehrere zylinderförmige Mantelabschnitte mit verschiedenen Innendurchmessern für mehrere verschiedene Flüssigkeitsbehälter ausgebohrt werden,
Fig. 4A eine schematische perspektivische Ansicht einer Platte aus einem massivem Naturstein, aus der sukzessive mehrere Längsabschnitte gemäß einer ersten Variante für einen Mantelabschnitt eines Flüssigkeitsbehälters ausgesägt werden,
Fig. 4B eine schematische Querschnittansicht eines Mantelabschnitts eines Flüssigkeitsbehälters, wobei in dem Mantelabschnitt mehrere Längsabschnitte aus Fig. 4A aufgenommen sind, geschnitten in einer Ebene senkrecht zu einer Längsachse des Mantelabschnitts,
Fig. 4C eine schematische perspektivische Ansicht des Mantelabschnitts aus der Fig. 4B,
Fig. 5A eine schematische perspektivische Ansicht einer Platte aus einem massivem Naturstein, aus der sukzessive mehrere Längsabschnitte gemäß einer zweiten Variante für einen Mantelabschnitt eines Flüssigkeitsbehälters ausgesägt werden,
Fig. 5B eine schematische Querschnittansicht eines Mantelabschnitts eines Flüssigkeitsbehälters, wobei in dem Mantelabschnitt mehrere Längsabschnitte aus Fig. 5A aufgenommen sind, geschnitten in einer Ebene senkrecht zu einer Längsachse des Mantelabschnitts,
Fig. 5C eine schematische perspektivische Ansicht des Mantelabschnitts aus der Fig. 5B,
Fig. 6A eine schematische Querschnittansicht eines Mantelabschnitts gemäß einer ersten Variante eines Flüssigkeitsbehälters bzw. einer Deckschicht gemäß einer ersten Variante eines Mantelabschnitts eines Flüssigkeitsbehälters, geschnitten in einer Ebene senkrecht zu einer Längsachse des Mantelabschnitts,
Fig. 6B eine schematische Querschnittansicht vergleichbar der Fig. 6A eines Mantelabschnitts gemäß einer zweiten Variante eines Flüssigkeitsbehälters bzw. einer Deckschicht gemäß einer zweiten Variante eines Mantelabschnitts eines Flüssigkeitsbehälters,
Fig. 6C eine schematische Querschnittansicht vergleichbar der Fig. 6A eines Mantelabschnitts gemäß einer dritten Variante eines Flüssigkeitsbehälters bzw. einer Deckschicht gemäß einer dritten Variante eines Mantelabschnitts eines Flüssigkeitsbehälters,
Fig. 6D eine schematische Querschnittansicht vergleichbar der Fig. 6A eines Mantelabschnitts gemäß einer vierten Variante eines Flüssigkeitsbehälters bzw. einer Deckschicht gemäß einer vierten Variante eines Mantelabschnitts eines Flüssigkeitsbehälters,
Fig. 7A eine schematische Querschnittansicht einer Deckschicht gemäß einer fünften Variante eines Mantelabschnitts eines Flüssigkeitsbehälters, geschnitten in einer Ebene senkrecht zu einer Längsachse des Mantelabschnitts,
Fig. 7B eine schematische Querschnittansicht vergleichbar der Fig. 7A einer Deckschicht gemäß einer sechsten Variante eines Mantelabschnitts eines Flüssigkeitsbehälters,
Fig. 7C eine schematische Querschnittansicht vergleichbar der Fig. 7A einer Deckschicht gemäß einer siebenten Variante eines Mantelabschnitts eines Flüssigkeitsbehälters,
Fig. 7D eine schematische Querschnittansicht vergleichbar der Fig. 7A einer Deckschicht gemäß einer achten Variante eines Mantelabschnitts eines Flüssigkeitsbehälters,
Fig. 8 eine schematische Querschnittansicht eines Mantelabschnitts gemäß einer weiteren Variante eines Flüssigkeitsbehälters, geschnitten in einer Ebene senkrecht zu einer Längsachse des Mantelabschnitts,
Fig. 9 eine schematische Querschnittansicht eines Mantelabschnitts gemäß einer noch weiteren Variante eines Flüssigkeitsbehälters, geschnitten in einer Ebene senkrecht zu einer Längsachse des Mantelabschnitts,
Fig. 10 eine schematische Querschnittansicht eines Mantelabschnitts gemäß einer noch weiteren Variante eines Flüssigkeitsbehälters, geschnitten in einer Ebene senkrecht zu einer Längsachse des Mantelabschnitts, und
Fig. 11 eine schematische perspektivische Ansicht eines Mantelabschnitt eines Behälters eines Flüssigkeitsbehälters, wobei der Mantelabschnitt in mehrere, in einer axialen Richtung aneinandergrenzende Mantelsegmente unterteilt ist.

### Ausführungsformen der Erfindung und Ausführungsformen zum Implementieren derselben

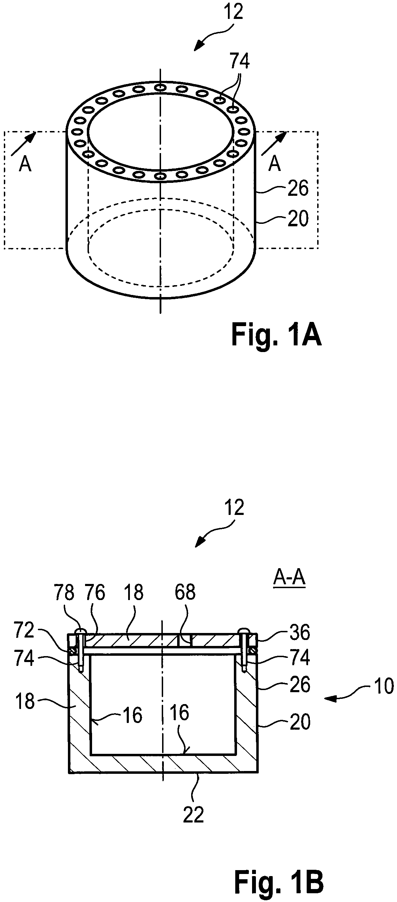

Fig. 1A zeigt einen Behälter 12 eines erfindungsgemäßen Flüssigkeitsbehälters mit einem Bodenabschnitt (nicht bezeichnet) und einem im Wesentlichen zylinderförmigen Mantelabschnitt 26. Der in Fig. 1A gezeigte Behälter 12 ist einteilig aus einem Monoblock eines massiven Natursteins hergestellt. In einer in Fig. 1A oberen Endfläche des Mantelabschnitts 26 ist eine Vielzahl von Verankerungslöchern 74 zum Verankern eines Dübels oder eines anderen Verbindungsmittels ausgebildet.

Fig. 1B zeigt den einteiligen, aus einem Monoblock 20 eines massiven Natursteins 18 hergestellten Behälter 12 aus der Fig. 1A, auf den zusätzlich ein Deckel 36, der seinerseits ebenfalls einteilig aus einem Monoblock eines massiven Natursteins hergestellt ist. In einem Umfangsbereich des Deckels 36 ist eine Vielzahl von Durchlöchern 76 in Rapport mit den Verankerungslöchern 74 in der oberen Endfläche des Mantelabschnitts 26 des Behälters 12 ausgebildet. Eine Dichtung 72, wie etwa ein Dichtring bzw. O-Ring, ist auf der oberen Endfläche des Mantelabschnitts 26 des Behälters 12 aufgelegt. Eine Vielzahl von Verschlussschrauben 78 ist jeweils durch eines der Durchlöcher 76 hindurch geführt und jeweils in einem Dübel in einem der Verankerungslöcher 74 festgeschraubt, so dass die Dichtung 72 zusammengedrückt wird und einen Spalt zwischen der Endfläche des Mantelabschnitts 26 des Behälters 12 und der inneren (in Fig. 1B unteren) Oberfläche des Deckels 36 abdichten kann. In dem Deckel 36 ist ferner eine Einfüllöffnung 68 zum Einfüllen von Flüssigkeit in den Behälter 12 vorgesehen.

Ein einteiliger Behälter 12, wie in den Figuren 1A und 1B gezeigt, mit einer Wandungsdicke von etwa 10 cm und einem Manteldurchmesser von etwa 150 cm wurde als erster Prototyp hergestellt und in einem Weingut bei der Herstellung von Wein (Weißwein) verwendet.

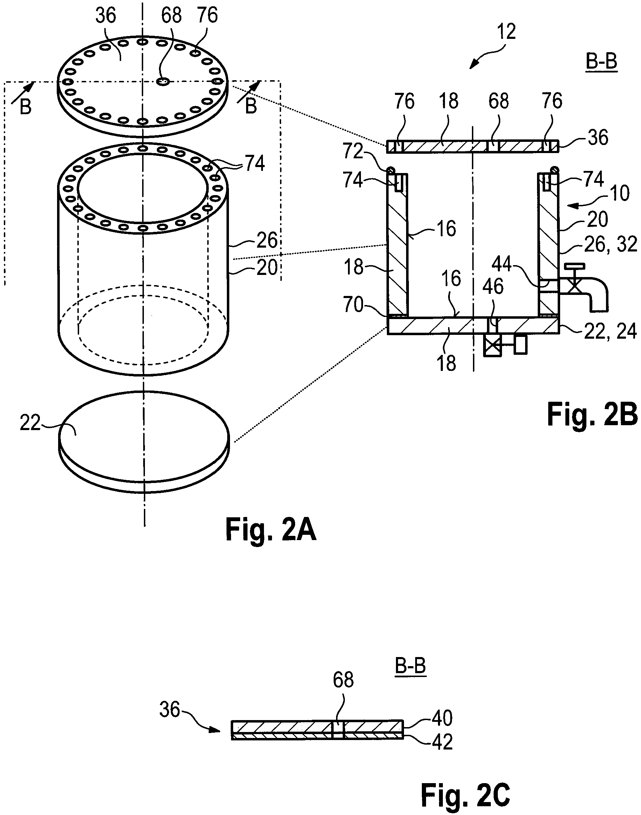

Die Figuren 2A und 2B zeigen einen im Hinblick auf die Herstellbarkeit verbesserten (die Herstellung vereinfachenden) zweiten Prototyp eines erfindungsgemäßen Flüssigkeitsbehälters 10. Der in den Figuren 2A und 2B gezeigte Flüssigkeitsbehälter 10 umfasst einen Behälter 12, der aus einem einteiligen, aus einem Monoblock eines massiven Natursteins 18 hergestellten, scheibenförmigen Bodenabschnitt 22 und einem ebenfalls einteiligen, aus einem Monoblock eines massiven Natursteins 18 hergestellten, im Wesentlichen zylinderförmigen Mantelabschnitt 26 aufgebaut ist, und einen Deckel 36, der ebenfalls einteilig aus einem Monoblock eines massiven Natursteins 18 hergestellt ist. In einer in Fig. 2A oberen Endfläche des Mantelabschnitts 26 ist eine Vielzahl von Verankerungslöchern 74 zum Verankern eines Dübels oder eines anderen Verbindungsmittels ausgebildet. In einem Umfangsbereich des Deckels 36 ist eine Vielzahl von Durchlöchern 76 in Rapport mit den Verankerungslöchern 74 in der oberen Endfläche des Mantelabschnitts 26 des Behälters 12 ausgebildet. Ferner ist in dem Deckel 36 eine Einfüllöffnung 68 zum Einfüllen von Flüssigkeit ausgebildet.

Wie in Fig. 2B gezeigt, umfasst der Flüssigkeitsbehälter 10 ferner einen ersten Flüssigkeitsauslass 44 als sogenannten Klarauslass, der in dem Mantelabschnitt 26 in einer Höhe von ca. 12 bis 25 cm (im Beispiel des zweiten Prototyps 20 cm) oberhalb der Oberseite des Bodenabschnitts 22 ausgebildet und mit einem aus Edelstahl hergestellten, öffen- und verschließbaren Auslassventil (nicht bezeichnet), wie etwa einem Ablasshahn, ausgestattet ist. Der erste Flüssigkeitsauslass 44 dient zum Ablassen bzw. Entnehmen von fertig hergestellter Flüssigkeit aus dem Flüssigkeitsbehälter 10, wobei ein etwaiger Bodensatz in dem Flüssigkeitsbehälter 10 unterhalb dieses Flüssigkeitsauslasses 44 verbleiben kann. Der in Fig. 2B gezeigte Flüssigkeitsbehälter 10 umfasst ferner einen zweiten Flüssigkeitsauslass 46, der in dem Bodenabschnitt 22 ausgebildet und mit einem ebenfalls aus Edelstahl hergestellten, öffen- und verschließbaren Auslassventil (nicht bezeichnet), wie etwa einem Ablasshahn, ausgestattet ist. Der zweite Flüssigkeitsauslass 46 dient zum Ablassen von Flüssigkeit, wie etwa der Flüssigkeit, die den Bodensatz enthält, oder z.B. im Rahmen eines Reinigungsprozesses zum Ablassen einer Reinigungsflüssigkeit. Der erste und der zweite Flüssigkeitsauslass 44 und 46 sind aus lebensmittelechten Materialien hergestellt und umfassen ausschließlich Komponenten, wie etwa Dichtungen, die ebenfalls aus lebensmittelechten Materialien hergestellt sind.

Der in Fig. 2B gezeigte Flüssigkeitsbehälter 10 umfasst ferner eine im Wesentlichen ringförmig ausgebildete, erste Dichtung 70, die etwa aus einem Klebemittel oder einem Fugendichtmittel hergestellt ist und zum Abdichten eines Spalts zwischen einer (in Fig. 2B unteren) Endabschnittsfläche des Mantelabschnitts 26 und einer (in Fig. 2B oberen) Oberfläche des Bodenabschnitts 22 dient. Der Flüssigkeitsbehälter 10 umfasst ferner eine im Wesentlichen ringförmig ausgebildete, zweite Dichtung 72, die etwa aus Moosgummi hergestellt sein kann, und zum Abdichten eines Spalts zwischen einer (in Fig. 2B oberen) Endabschnittsfläche des Mantelabschnitts 26 und einer (in Fig. 2B unteren) Oberfläche des Deckels 36 dient. Die erste Dichtung 70 und die zweite Dichtung 72 sind aus lebensmittelechten Materialien hergestellt.

Fig. 2C zeigt einen Deckel 36 für einen Behälter 12, der sich von dem in den Figuren 2A und 2B gezeigten Deckel 36 dadurch unterscheidet, dass er nicht einteilig ausgebildet ist, sondern eine Deckeltrageschicht 40 und eine flächig damit verbundene Deckeldeckschicht 42 umfasst. Dabei ist lediglich die Deckeldeckschicht 42 aus massivem Naturstein hergestellt. Die Deckeltrageschicht 40 ist aus Beton oder einem anderen aushärtbaren Kunststein ausgebildet. In dem Deckel 36 ist eine Einfüllöffnung 66 zum Einfüllen von Flüssigkeit vorgesehen.

Entsprechend dem in Fig. 2C gezeigten Deckel 36 kann auch der in den Figuren 2A und 2B gezeigte Bodenabschnitt 22 so modifiziert werden, dass er nicht einteilig ausgebildet ist, sondern eine Bodentrageschicht (nicht gezeigt) und eine flächig damit verbundene Bodendeckschicht (nicht gezeigt) umfasst. Dabei kann lediglich die Bodendeckschicht aus massivem Naturstein hergestellt sein, und die Bodentrageschicht kann aus Beton oder einem anderen aushärtbaren Kunststein ausgebildet sein.

Auch an dem in den Figuren 1A und 1B gezeigten, aus einem Monoblock eines massiven Natursteins herausgearbeiteten Behälter 12 können im Mantelabschnitt 26 ein erster Flüssigkeitsauslass (nicht gezeigt) mit einem öffen- und verschließbaren Auslassventil, wie etwa einem Ablasshahn, in einem vorbestimmten Abstand zu (bzw. Höhe über) dem Bodenabschnitt 22, etwa als Klarauslass, und in dem Bodenabschnitt 22 ein zweiter Flüssigkeitsauslass (nicht gezeigt) mit einem öffen- und verschließbaren Auslassventil, wie etwa einem Ablasshahn, etwa als Reinigungsauslass, vorgesehen sein.

Mit Verweis auf die Figuren 1B und 2B sei noch erwähnt, dass es bei einer Benutzung der gezeigten Flüssigkeitsbehälter 10, wie etwa in der Getränkeherstellung, wichtig ist, dass ein im Bodenabschnitt 22 vorgesehener Flüssigkeitsauslass (nicht gezeigt) mit einem an einer Unterseite des Bodenabschnitts angebrachten, öffen- und verschließbaren Auslassventil zugänglich und betätigbar ist, dass ein Raum unterhalb des Flüssigkeitsbehälters 10 zugänglich ist und gereinigt werden kann, und dass in dem Raum unterhalb des Flüssigkeitsbehälters 10 eine Luftzirkulation möglich ist. Um all dieses zu ermöglichen, ist vorgesehen, den Flüssigkeitsbehälters 10 auf einem Unterbau anzuordnen. Ein geeigneter Unterbau kann zwei parallel angeordnete liegende Steinriegel (nicht gezeigt), d.h. Säulen aus Naturstein mit z.B. dreieckigem, quadratischen oder rechteckförmigen Querschnitt, umfassen, auf denen der Bodenabschnitt 22 des Flüssigkeitsbehälters 10 aufgesetzt wird.

Bei einer Benutzung der in den Figuren 1 und 2 gezeigten Flüssigkeitsbehälter 10, wie etwa in der Getränkeherstellung, ist es auch wichtig, dass der Flüssigkeitsbehälter 10 ggf. in einem mit Flüssigkeit befüllten Zustand, von einer ersten Aufstellposition zu einer zweiten Aufstellposition versetzt werden kann. Dabei kann ein Gabelstapler benutzt werden. Um das Versetzen des Flüssigkeitsbehälters 10 zu ermöglichen, kann vorgesehen sein, dass im Bodenabschnitt 22 sich horizontal erstreckende Ausnehmung bzw. Bohrungen (nicht gezeigt) vorgesehen sind, in die die Greifgabeln eines Gabelstaplers eingreifen können, um den Flüssigkeitsbehälter 10 anzuheben.

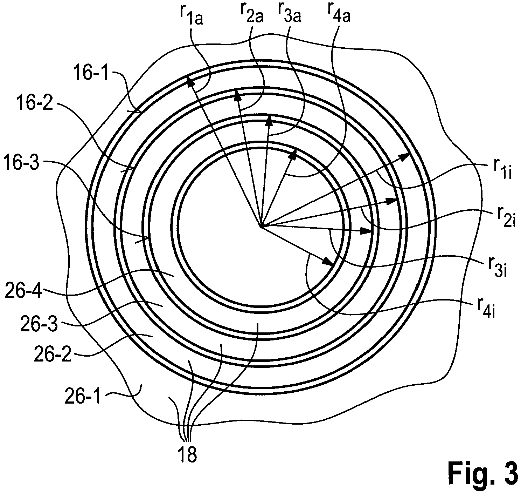

In der Fig. 3 ist eine Ausführungsform des Verfahrens gemäß dem zweiten Aspekt der Erfindung veranschaulicht. Das Verfahren dient zur Herstellung eines Flüssigkeitsbehälters zur Herstellung und/oder Lagerung von zum Trinkkonsum vorgesehenen Flüssigkeiten. In dem Verfahren wird zunächst ein Block (nicht bezeichnet) aus einem massiven Naturstein 18 bereitgestellt (Implementierung des Schritts (a)). Dann wird mittels eines ersten Hohlbohrkernbohrers (nicht gezeigt) mit einem ersten Außendurchmesser d₁ₐ = 2*r₁ₐ, wobei r₁ₐ der entsprechende erste Außenradius ist, in dem Block eine im Wesentlichen zylinderförmige erste Innenwandoberfläche 16-1 mit einem ersten Innendurchmesser, der nominal dem ersten Außendurchmesser des Hohlbohrkernbohrers entspricht, ausgebohrt. Die dabei entstehende zylinderförmige erste Innenwandoberfläche 16-1 kann direkt oder gegebenenfalls nach Ausführen eines weiter unten beschriebenen Oberflächenbearbeitungsschritts als Innenwandoberfläche 16-1 eines ersten Mantelabschnitts 26-1 eines ersten Flüssigkeitsbehälters vorgesehen sein (Implementierung des Schritts (b)).

Was in Fig. 3 nicht dargestellt ist, ist, dass nach dem Schritt (b) ein Bodenabschnitt (nicht gezeigt) aus massivem Naturstein mit einer im Wesentlichen ebenen Oberfläche, die direkt oder gegebenenfalls nach Ausführen eines Oberflächenbearbeitungsschritts als Bodenabschnitt der Innenwandoberfläche des ersten Flüssigkeitsbehälters vorgesehen ist, bereitgestellt (Implementierung des Schritts (c)) und mit dem Mantelabschnitt 26-1 an einem Ende des Mantelabschnitts 26-1 flüssigkeitsdicht verbunden wird. Dann wird noch ein Deckelabschnitt (nicht gezeigt) aus massivem Naturstein mit einer im Wesentlichen ebenen Oberfläche, die direkt oder gegebenenfalls nach Ausführen eines Oberflächenbearbeitungsschritts als Deckelabschnitt der Innenwandoberfläche des Flüssigkeitsbehälters vorgesehen ist, bereitgestellt und mit dem Mantelabschnitt 26-1 an dessen anderen Ende flüssigkeitsdicht und lösbar verbunden.

In dem in Fig. 3 veranschaulichten Verfahren wird als weiteres Ergebnis des Ausbohrens mit dem ersten Hohlkernbohrer (Schritt (b)) ein im Wesentlichen zylinderförmiger Bohrkern 26-2, 26-3, 26-4 aus massivem Naturstein mit einem ersten Außendurchmesser erzeugt. Dabei entspricht der erste Außendurchmesser nominal einem Innendurchmesser d₁ᵢ = 2*r₁ᵢ (r₁ᵢ ist der entsprechende Innenradius) des ersten Hohlbohrkernbohrers. In den im Schritt b) erhaltenen, im Wesentlichen zylinderförmigen Bohrkern 26-2, 26-3, 26-4 aus massivem Naturstein, wird mittels eines zweiten Hohlbohrkernbohrers (nicht gezeigt) mit einem zweiten Außendurchmesser d₂ₐ = 2*r₂ₐ, wobei r₂ₐ der entsprechende zweite Außenradius ist, der um einen vorbestimmten Wert kleiner als der erste Außendurchmesser d₁ₐ = 2*r₁ₐ ist, und koaxial zu der mit dem ersten Hohlbohrkernbohrer (im Schritt (b)) durchgeführten ersten Ausbohrung, eine im Wesentlichen zylinderförmige zweite Innenwandoberfläche 16-2 mit einem zweiten Innendurchmesser so ausgebohrt, dass ein als Mantelabschnitt 26-2 eines zweiten Flüssigkeitsbehälters verwendbarer Zylindermantel aus massivem Naturstein entsteht, dessen zweite Innenwandoberfläche direkt oder gegebenenfalls nach Ausführen eines Oberflächenbearbeitungsschritts als Innenwandoberfläche des Mantelabschnitts des zweiten Flüssigkeitsbehälters vorgesehen ist (Implementierung des Schritts (d)).

Dann wird in den im Schritt (d) ebenfalls erhaltenen, im Wesentlichen zylinderförmigen Bohrkern 26-3, 26-4, mittels eines dritten Hohlbohrkernbohrers mit einem dritten Außendurchmesser d₃ = 2*r₃, wobei r₃ der entsprechende dritte Außenradius ist, der um einen vorbestimmten Wert kleiner als der zweite Außendurchmesser ist, und koaxial zu den in den Schritten b) und d) durchgeführten ersten und zweiten Ausbohrungen, eine im Wesentlichen zylinderförmige dritte Innenwandoberfläche 16-3 mit einem dritten Innendurchmesser so ausgebohrt, dass ein als Mantelabschnitt 26-3 eines dritten Flüssigkeitsbehälters verwendbarer Zylindermantel aus massivem Naturstein entsteht, dessen dritte Innenwandoberfläche direkt oder gegebenenfalls nach Ausführen eines Oberflächenbearbeitungsschritts als Innenwandoberfläche des Mantelabschnitts des dritten Flüssigkeitsbehälters vorgesehen ist (Implementierung des Schritts (e)). Es ist offensichtlich, dass die Schritte (d) und (e) mit jeweils weiteren Hohlbohrkernbohrern mit sukzessive kleineren Durchmessern wiederholt werden können.

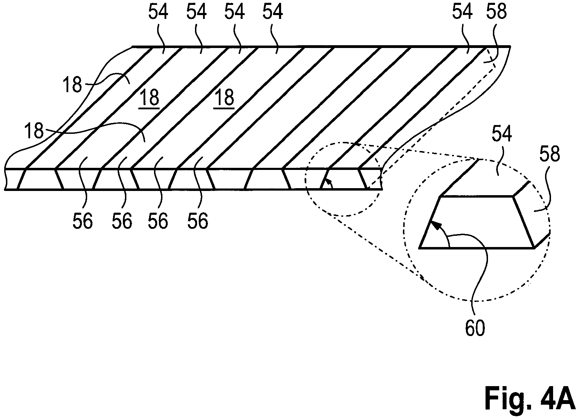

Die Figuren 4A bis 5C veranschaulichen weitere Ausführungsformen des Aufbaus eines erfindungsgemäßen Flüssigkeitsbehälters 10 und Verfahren gemäß dem dritten Aspekt der Erfindung zur Herstellung eines erfindungsgemäßen Flüssigkeitsbehälters 10.

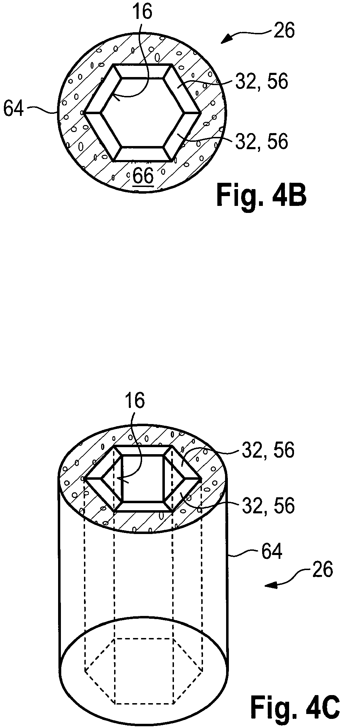

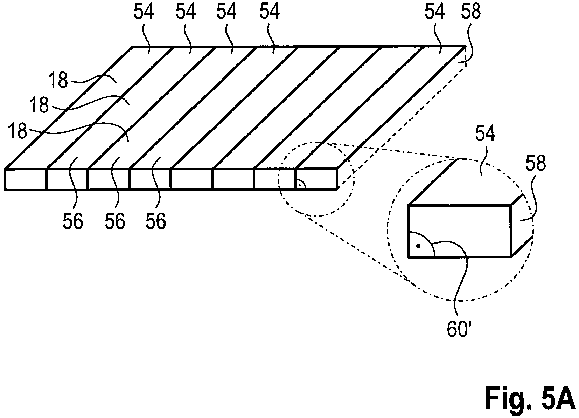

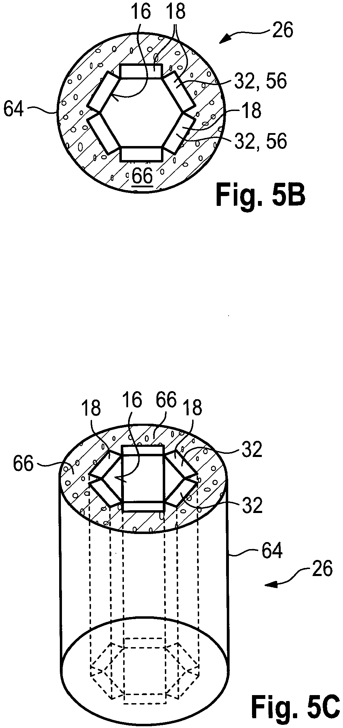

Wie in den Figuren 4A und 5A gezeigt, wird in Ausführungsformen des Verfahrens gemäß dem dritten Aspekt zunächst ein im Wesentlichen plattenförmig ausgebildeter Block aus einem massiven Naturstein 18 bereitgestellt, der zwei im Wesentlichen parallel und entgegengesetzt zueinander angeordnete Plattenoberflächen 54 aufweist (Implementierung des Schritts (A)). Dann werden aus dem plattenförmigen Block mindestens zwei, im Beispiel der Figuren 4B, 4C, 5B und 5C sechs, Längsabschnitte 56 mit jeweils zwei Längsseitenflächen 58 ausgesägt (Implementierung des Schritts (B)). Die Längsseitenflächen 58 bilden in Bezug auf eine der Plattenoberflächen 54 entweder einen spitzen Winkel 60 (wie in Fig. 4A gezeigt) oder einen rechten Winkel 60' (wie in Fig. 5A gezeigt).

Wenn die Längsseitenflächen 58 in Bezug auf eine der Plattenoberflächen 54 einen spitzen Winkel 60 bilden, wie in Fig. 4A gezeigt, sind die beiden entgegengesetzten Längsseitenflächen 58 eines Längsabschnitts 56 zueinander geneigt ausgebildet. Dies ermöglicht, dass die jeweils zwei Längsabschnitte 56 auf Gehrung aneinander angrenzend angeordnet werden können. Entsprechend werden drei oder mehr Längsabschnitte 56 aus der Fig. 4A zu einem Hohlkörper zusammengesetzt (Implementierung des Schritt (C)), so dass die Plattenoberflächen 54 der Längsabschnitte 56 die Innenwandoberfläche 16 eines Mantelabschnitts 26 eines Flüssigkeitsbehälters bilden, wie in Fig. 4B gezeigt. Dann wird der durch Zusammensetzen der Längsabschnitte 56 erhaltene Hohlkörper mit Beton 66 oder mit einem gießbaren und/oder formbaren, aushärtbaren Kunststein umgossen oder umspritzt, so dass eine äußere Mantelfläche 62 des Hohlkörpers vollständig mit Beton und/oder aushärtbarem Kunststein überdeckt ist, wie in Fig. 4B angedeutet, und der Beton 66 oder der Kunststein aushärten gelassen (Implementierung des Schritts (D)). Auf diese Weise wird ein Mantelabschnitt 26 hergestellt, wie in Fig. 4C gezeigt, dessen äußere Mantelfläche 64 vollständig mit ausgehärtetem Beton 66 oder Kunststein bedeckt ist, und dessen Innenwandoberfläche 16 im Wesentlichen vollständig als Oberfläche eines massiven Natursteins 18, hier als die Plattenoberflächen 54 der gemäß Fig. 4A bereitgestellten Längsabschnitte 56 aus massivem Naturstein 18, ausgebildet ist.

Wenn die Längsseitenflächen 58 in Bezug auf eine der Plattenoberflächen 54 einen rechten Winkel 60' bilden, wie in Fig. 5A gezeigt, sind die beiden entgegengesetzten Längsseitenflächen 58 eines Längsabschnitts 56 parallel zueinander ausgebildet. In diesem Fall ist es nicht möglich, jeweils zwei Längsabschnitte 56 auf Gehrung aneinander angrenzend anzuordnen, jedoch können jeweils zwei Längsabschnitte 56 so angeordnet werden, dass jeweils zwischen einer Plattenoberfläche 54 und einer Längsseitenfläche 58 eines Längsabschnitts 56 ausgebildeten Längskanten von zwei benachbarten Längsabschnitten 56 miteinander in Kontakt kommen können. Entsprechend werden drei oder mehr Längsabschnitte 56 aus der Fig. 5A zu einem Hohlkörper zusammengesetzt (Implementierung des Schritt (C)), so dass die Plattenoberflächen 54 der Längsabschnitte 56 die Innenwandoberfläche 16 eines Mantelabschnitts 26 eines Flüssigkeitsbehälters bilden, wie in Fig. 5B gezeigt. Dann wird der durch Zusammensetzen der Längsabschnitte 56 erhaltene Hohlkörper mit Beton 66 oder mit einem gießbaren und/oder formbaren, aushärtbaren Kunststein umgossen oder umspritzt, so dass eine äußere Mantelfläche 62 des Hohlkörpers vollständig mit Beton und/oder aushärtbarem Kunststein überdeckt ist, wie in Fig. 5B angedeutet, und der Beton 66 oder der Kunststein aushärten gelassen (Implementierung des Schritts (D)). Auf diese Weise wird ein Mantelabschnitt 26 hergestellt, wie in Fig. 5C gezeigt, dessen äußere Mantelfläche 64 vollständig mit ausgehärtetem Beton 66 oder Kunststein bedeckt ist und dessen Innenwandoberfläche 16 im Wesentlichen vollständig als Oberfläche eines massiven Natursteins 18, hier als die Plattenoberflächen 54 der gemäß Fig. 5A bereitgestellten Längsabschnitte 56 aus massivem Naturstein 18, ausgebildet ist.

Um auf der Grundlage eines gemäß den Figuren 4A bis 4C oder gemäß den Figuren 5A bis 5C hergestellten Mantelabschnitts 26 einen Flüssigkeitsbehälter entsprechend dem in der Fig. 2B gezeigten fertig zu stellen, wird noch ein als Bodenplatte ausgebildeter Bodenabschnitt 22 (z.B. wie in Fig. 2A), von dem zumindest eine als Innenwandoberfläche vorgesehene Seite im Wesentlichen vollständig als Oberfläche eines massiven Natursteins ausgebildet ist, bereitgestellt (Implementierung des Schritts (E)). Ein derartiger Bodenabschnitt 22 wird mit einem Endbereich des in Fig. 4C gezeigten Mantelabschnitts 26 flüssigkeitsdicht verbunden, wie in Fig. 2B gezeigt, so dass ein an dem anderen Endbereich des Mantelabschnitts 26 offener Behälter 12 hergestellt ist (Implementierung des Schritts (F)).

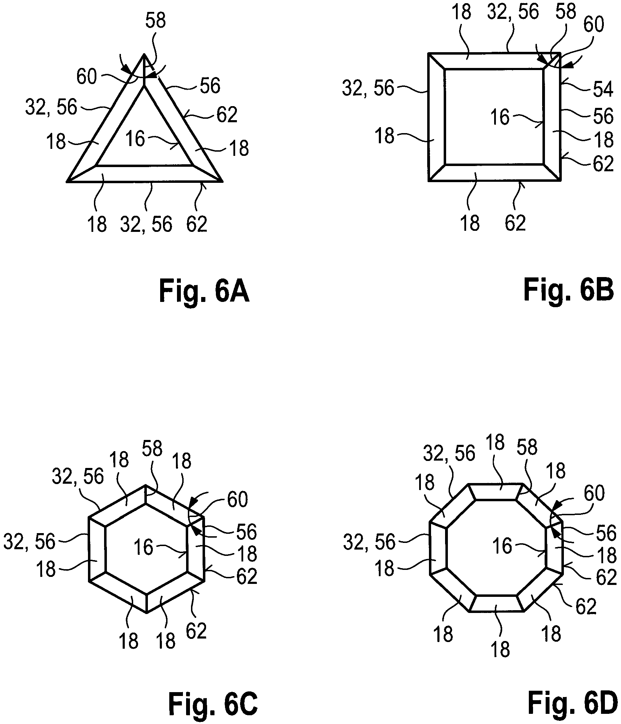

Die Figuren 6A bis 6D veranschaulichen Variationen der Ausgestaltung (vgl. Fig. 4A, Schritt (A)) und Anordnung (vgl. Fig. 4B, Schritt (B)) von gemäß Fig. 4A hergestellten Längsabschnitten 56, bei denen jeweils zwischen einer Plattenoberfläche 54 und einer Längsseitenfläche 58 ein spitzer Winkel 60 ausgebildet ist, so dass jeweils zwei benachbarte Längsabschnitte 56 auf Gehrung in Kontakt miteinander angeordnet werden können.

In Fig. 6A sind drei Längsabschnitte 56 jeweils an ihren Längsseitenflächen 58 auf Gehrung miteinander angeordnet und umringen (definieren) einen Hohlraum, der nach einem Umgießen oder Umspritzen mit Beton oder einem aushärtbarem Kunststein (vgl. Fig. 4B, Schritt (C)) ein Innenraum eines Mantelabschnitts eines Behälters werden kann. In Fig. 6B sind vier, in Fig. 6C sechs und in Fig. 6D acht Längsabschnitte 56 jeweils an ihren Längsseitenflächen 58 auf Gehrung miteinander angeordnet und umringen (definieren) einen Hohlkörper, der die Innenwandoberfläche 16 eines Mantelabschnitts 26 eines Flüssigkeitsbehälters bilden kann, wie in Fig. 4C veranschaulicht.

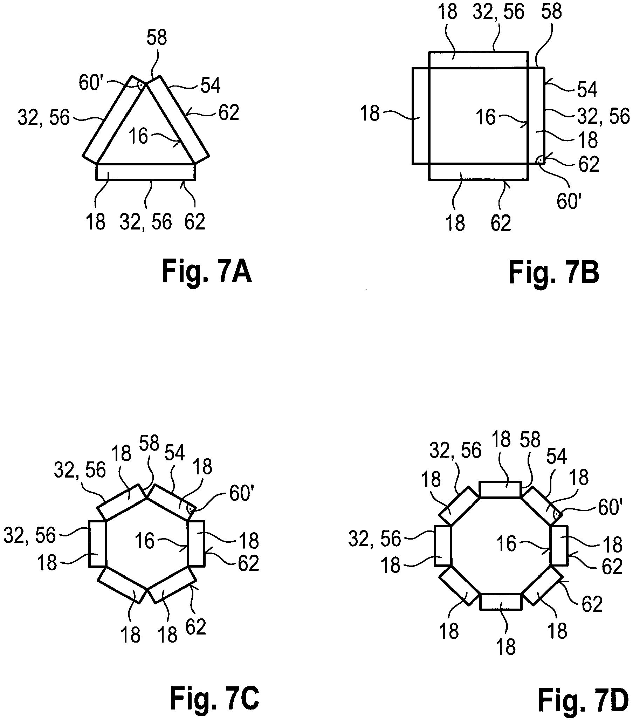

Die Figuren 7A bis 7D veranschaulichen Variationen der Ausgestaltung (vgl. Fig. 5A, Schritt (A)) und Anordnung (vgl. Fig. 5B, Schritt (B)) von gemäß Fig. 5A hergestellten Längsabschnitten 56. Bei diesen Längsabschnitten 56 ist jeweils zwischen einer Plattenoberfläche 54 und einer Längsseitenfläche 58 ein spitzer Winkel 60 ausgebildet. So können jeweils zwei benachbarte Längsabschnitte 56 so zueinander angeordnet werden, dass deren Längskanten in Kontakt miteinander sind.

In Fig. 7A sind drei Längsabschnitte 56 jeweils an ihren Längskanten in Kontakt miteinander angeordnet und umringen (definieren) einen Hohlraum, der nach einem Umgießen oder Umspritzen mit Beton oder einem aushärtbarem Kunststein (vgl. Fig. 5B, Schritt (C)) ein Innenraum eines Mantelabschnitts eines Behälters werden kann. In Fig. 7B sind vier, in Fig. 7C sechs und in Fig. 7D acht Längsabschnitte 56 jeweils an ihren Längskanten in Kontakt miteinander angeordnet und umringen (definieren) einen Hohlkörper, der die Innenwandoberfläche 16 eines Mantelabschnitts 26 eines Flüssigkeitsbehälters bilden kann, wie in Fig. 5C veranschaulicht.

Die in den Figuren 4B, 5B, 6A bis 6D und 7A bis 7D gezeigten Anordnungen von jeweils aus massivem Naturstein hergestellten Längsabschnitten 56 veranschaulichen, dass die Innenwandoberfläche 16 eines Mantelabschnitts 26 eines Behälters 12 in Umfangsrichtung in mehrere (zwei oder mehr) Segmente, z.B. in drei Segmente (wie in Fig. 6A und 7A), in vier Segmente (wie in Fig. 6B und 7B), in sechs Segmente (wie in Fig. 6C und 7C) oder in acht Segmente (wie in Fig. 6D und 7D) unterteilt sein kann. Jedoch kann die Anzahl der in Umfangsrichtung aneinander gereihten Segmente auch zwei, fünf, sieben oder eine größere ganze Zahl sein.

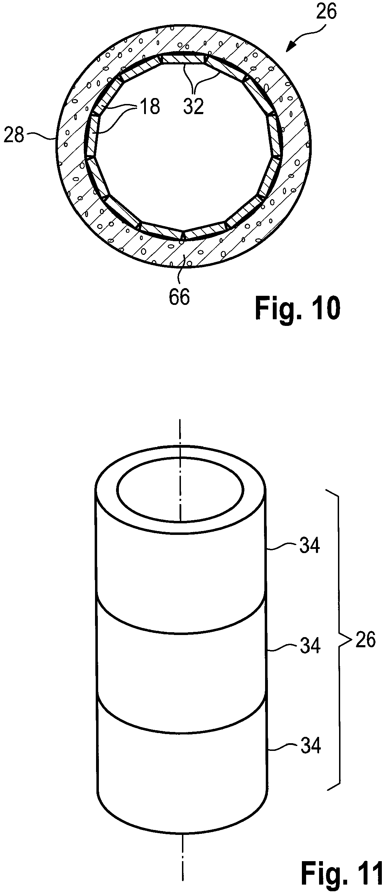

Es sei angemerkt, dass ein Mantelabschnitt 26 eines Behälters 12 nicht nur in seiner Umfangsrichtung, sondern auch in seiner Längsrichtung, z.B. axialen Richtung, in mehrere (zwei oder mehr) Mantelsegmente unterteilt sein kann, wie in Fig. 11 beispielhaft veranschaulicht. Fig. 11 zeigt schematisch einen aus drei erfindungsgemäßen Mantelsegmenten 34 zusammengesetzten Mantelabschnitt 26 für einen erfindungsgemäßen Behälter.

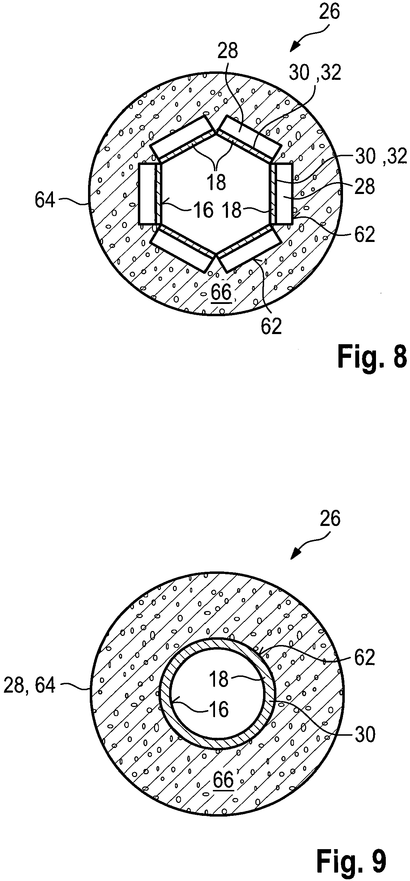

Fig. 8 zeigt schematisch einen erfindungsgemäßen Mantelabschnitt 26 für einen erfindungsgemäßen Flüssigkeitsbehälter, der als eine Variation der in Fig. 5B gezeigten Ausführungsform eines Mantelabschnitts 26 anzusehen ist. Bei dem in Fig. 8 gezeigten Mantelabschnitt 26 sind anstelle der in Fig. 5B gezeigten Längsabschnitte aus massivem Naturstein 18 Kompositkörper mit Beton 66 umgossen. Jeder der in Fig. 8 gezeigten Kompositkörper besteht aus einer Trageschicht 28, die nicht aus Naturstein bzw. massivem Naturstein besteht, und einer Deckschicht 30 bzw. einem Deckschichtsegment 32, die/das aus massivem Naturstein 18 ausgebildet ist und mit der Tragschicht 28 flächig verbunden ist. Diese Kompositkörper können in Formen, die den in den Figuren 6A bis 7D veranschaulichten, vielfältigen möglichen Formen der Längsabschnitte 56 entsprechen, bereitgestellt werden und daraus erfindungsgemäße Behälter 12 hergestellt werden.

Fig. 9 zeigt schematisch einen erfindungsgemäßen Mantelabschnitt 26 für einen erfindungsgemäßen Flüssigkeitsbehälter, der als eine Variation der in Fig. 2B gezeigten Ausführungsform eines Mantelabschnitts 26 aus massivem Naturstein anzusehen ist. Bei dem in Fig. 8 gezeigten Mantelabschnitt 26 ist anstelle des in Fig. 2B gezeigten, relativ dicken Mantelabschnitts aus massivem Naturstein ein rohrförmiger bzw. zylinderförmiger Körper (Monoblock) aus Naturstein, jedoch mit einer relativ kleineren Dicke bereitgestellt und mit Beton 66 oder einem aushärtbaren Kunststein umgossen.

Bezüglich der Figuren 4B und 5B wurde beschrieben, dass eine einen Hohlkörper definierende Anordnung von mehreren Längsabschnitten 56 mit Beton 66 oder einem gießbaren und aushärtbaren Kunststein umspritzt bzw. umgossen werden kann. In Variation dieses Verfahrensschritts ist es auch möglich, einen z.B. aus Beton oder einem aushärtbaren Kunststein gegossenen, z.B. rohrförmigen Körper als eine Trageschicht 28 bereitzustellen und an deren Innenoberfläche eine Vielzahl von Längsabschnitten 56 aus massivem Naturstein oder alternativ auch in Längsrichtung (axialer Richtung) in kleinere Segmente unterteilte, z.B. rechteckigförmige Platten, wie etwa Fliesen, mit einer Oberfläche aus massivem Naturstein als eine Deckschicht 30 anzubringen, z.B. anzukleben. Die z.B. rechteckförmigen Platten, wie etwa Fliesen, bilden dabei Deckschichtsegmente 32 einer Deckschicht 30 aus massivem Naturstein, die an einer Innenoberfläche einer Tragschicht 28, die nicht aus Naturstein zu sein braucht, befestigt sind, so dass eine Innenwandoberfläche unterteilt in Deckschichtsegmente 32, jedoch im Wesentlichen vollständig aus massivem Naturstein ausgebildet ist.

Ein Flüssigkeitsbehälter 10, so wie er hiervor beschrieben worden ist, kann zur Verwendung in einem Verfahren zur Herstellung und/oder Lagerung von zum Trinkkonsum vorgesehenen Flüssigkeiten vorgesehen sein. Zu den Grundanforderungen an einen solchen Flüssigkeitsbehälter gehört, dass der Behälter 12 an einer Seite offen ist, dass er eine Behälterwandung 14 mit einer Innenwandoberfläche 16 umfasst, und dass die Innenwandoberfläche 16 zumindest teilweise als eine Oberfläche eines massiven Natursteins 18 ausgebildet ist.

Gemäß dem erfindungsgemäßen Verfahren zur Herstellung und/oder Lagerung einer zum Trinkkonsum vorgesehenen Flüssigkeit oder eines Vorprodukts für eine derartige Flüssigkeit wird zunächst ein Flüssigkeitsbehälter 10 bereitgestellt, der die im vorhergehenden Absatz bezeichneten Grundanforderungen erfüllt (Schritt (i)). Dann wird zumindest ein Teilbereich des Flüssigkeitsbehälters 10 in Bezug auf die Temperatur der umgebenden Luftatmosphäre abgekühlt (Schritt (ii)). Sodann wird eine Flüssigkeit in den abgekühlten Flüssigkeitsbehälter 10 eingefüllt (Schritt (iii)). Schließlich wird ein Schritt einer chemischen und/oder biochemischen Umwandlung der eingefüllten Flüssigkeit, wie etwa eine Fermentation oder eine Vergärung, initiiert, um die Flüssigkeit oder ein Vorprodukt dafür zu erzeugen (Schritt (iv)). Während der chemischen und/oder biochemischen Umwandlung werden keine weiteren Maßnahmen bzw. Prozesse zur Kühlung des Flüssigkeitsbehälters 10 und/oder der sich in dem Flüssigkeitsbehälter 10 befindenden Flüssigkeit ergriffen bzw. durchgeführt.

Das Abkühlen im Schritt (ii) kann von selbst im Rahmen des Temperaturausgleichs mit der Umgebung in einer Räumlichkeit, die vor Sonnenlicht und Wärmeeinstrahlung abgeschottet ist, erfolgen. Eine geeignete Räumlichkeit kann zumindest teilweise unter der Erdoberfläche liegen. Bei der Herstellung von Wein kann etwa ein Weinkeller eine geeignete Räumlichkeit sein. Das Abkühlen kann in den Temperaturbereich von 6°C bis 12°C, bevorzugt in den Temperaturbereich von 8°C bis 10°C, erfolgen.

Der Flüssigkeitsbehälter 10 kann einen Mantelabschnitt 26 und einen Bodenabschnitt 22 umfassen; dabei kann das Abkühlen ein Abkühlen von zumindest einem Teilbereich von dem Mantelabschnitt 26 und dem Bodenabschnitt 22 umfassen. Der Flüssigkeitsbehälter 10kann ferner einen Deckel 36 umfassen, dabei kann das Abkühlen ferner ein Abkühlen von zumindest einem Teilbereich des Deckels 36 umfassen.

In dem erfindungsgemäßen Verfahren können, anschließend an die oben genannten Schritte (i) bis (iv), in dem Flüssigkeitsbehälter 10, für ein/bei einem im Schritt (iv) erhaltenen Vorprodukt, weitere Verarbeitungs- und oder Bearbeitungsschritte initiiert, durchgeführt und/oder abgewartet werden, wie etwa ein Reifungsprozess, durch den die zum Trinkkonsum vorgesehene Flüssigkeit schließlich erzeugt wird.

Die Flüssigkeit kann eine alkoholhaltige Flüssigkeit, wie etwa Wein, Fruchtwein, oder ein anderes aus dem Saft von Weintrauben oder Früchten herstellbares Getränk, oder Schnaps, Whisky, Bier oder ein Mischgetränk sein.

### Bezugszeichenliste:

- 10: Flüssigkeitsbehälter
- 12: Behälter
- 14: Behälterwandung
- 16: Innenwandoberfläche
- 18: Naturstein
- 20: Monoblock
- 22: Bodenabschnitt
- 24: Dichtung
- 26: Mantelabschnitt
- 28: Trageschicht
- 30: Deckschicht
- 32: Deckschichtsegment
- 34: Mantelsegment
- 36: Deckel
- 38: Deckeloberfläche
- 40: Deckeltrageschicht
- 42: Deckeldeckschicht
- 44: erster Flüssigkeitsauslass
- 46: zweiter Flüssigkeitsauslass
- 48: erste Innenwandung
- 50: zweite Innenwandung
- 52: dritte Innenwandung
- 54: Plattenoberfläche
- 56: Längsabschnitt
- 58: Längsseitenfläche
- 60: spitzer Winkel
- 60': rechter Winkel
- 62: äußere Mantelfläche
- 64: Außenschicht
- 66: Beton
- 68: Einfüllöffnung
- 70: erste Dichtung
- 72: zweite Dichtung
- 74: Verankerungsloch
- 76: Durchloch
- 78: Verschlussschraube
- r₁ₐ: erster Außenradius
- d₁ₐ = 2*r₁ₐ: erster Außendurchmesser
- r₁ᵢ: erster Innenradius
- d₁ᵢ = 2*r₁ᵢ: erster Innendurchmesser
- r₂ₐ: zweiter Außenradius
- d₂ₐ = 2*r₂ₐ: zweiter Außendurchmesser
- r₂ᵢ: zweiter Innenradius
- d₂ᵢ = 2*r₂ᵢ: zweiter Innendurchmesser
- r₃ₐ: dritter Außenradius
- d₃ₐ = 2*r₃ₐ: dritter Außendurchmesser
- r₃ᵢ: dritter Innenradius
- d₃ᵢ = 2*r₃ᵢ: dritter Innendurchmesser

## Patentansprüche

1. Verfahren zur Herstellung und/oder Lagerung einer zum Trinkkonsum vorgesehenen Flüssigkeit oder eines Vorprodukts für eine derartige Flüssigkeit, mit den folgenden Schritten:
(i) Bereitstellen eines Flüssigkeitsbehälter (10), der zur Herstellung und/oder Lagerung von zum Trinkkonsum vorgesehenen Flüssigkeiten vorgesehen ist, der einen an einer Seite offenen Behälter (12) mit einer Behälterwandung (14) mit einer Innenwandoberfläche (16) umfasst, wobei die Innenwandoberfläche (16) zumindest teilweise als eine Oberfläche eines massiven Natursteins (18) ausgebildet ist;
(ii) Abkühlen von zumindest einem Teilbereich des Flüssigkeitsbehälters (10) in Bezug auf die Temperatur der umgebenden Luftatmosphäre;
(iii) Einfüllen einer Flüssigkeit in den gemäß Schritt (ii) abgekühlten Flüssigkeitsbehälter (10); und
(iv) Initiieren eines Schritts einer chemischen und/oder biochemischen Umwandlung der eingefüllten Flüssigkeit, wie etwa eine Fermentation oder eine Vergärung, zum Erzeugen der Flüssigkeit oder eines Vorprodukts, wobei während der Umwandlung keine weiteren Maßnahmen bzw. Prozesse zur Kühlung des Flüssigkeitsbehälters (10) und/oder der sich in dem Flüssigkeitsbehälter (10) befindenden Flüssigkeit ergriffen bzw. durchgeführt werden.

2. Verfahren nach Anspruch 1, wobei das Abkühlen von selbst im Rahmen des Temperaturausgleichs mit der Umgebung in einer Räumlichkeit, die vor Sonnenlicht und Wärmeeinstrahlung abgeschottet ist, erfolgt.

3. Verfahren nach Anspruch 2, wobei die Räumlichkeit zumindest teilweise unter der Erdoberfläche liegt, wie etwa ein Weinkeller.

4. Verfahren nach einem der Ansprüche 1 bis 3, wobei das Abkühlen in den Temperaturbereich von 6°C bis 12°C, bevorzugt in den Temperaturbereich von 8°C bis 10°C, erfolgt.

5. Verfahren nach einem der Ansprüche 1 bis 4, wobei der Flüssigkeitsbehälter (10) einen Mantelabschnitt (26) und einen Bodenabschnitt (22) umfasst, und wobei das Abkühlen ein Abkühlen von zumindest einem Teilbereich von dem Mantelabschnitt (26) und dem Bodenabschnitt (22) umfasst.

6. Verfahren nach Anspruch 5, wobei der Flüssigkeitsbehälter (10) ferner einen Deckel (36) umfasst, und wobei das Abkühlen ferner ein Abkühlen von zumindest einem Teilbereich des Deckels (36) umfasst.

7. Verfahren nach einem der Ansprüche 1 bis 6, ferner **gekennzeichnet durch** den folgenden Schritt:
(v) in dem Flüssigkeitsbehälter (10), mit einem im Schritt (iv) erhaltenen Vorprodukt, Initiieren, Durchführen und/oder Abwarten von weiteren Verarbeitungs- und oder Bearbeitungsschritten, wie etwa einem Reifungsprozess, zum Erzeugen der zum Trinkkonsum vorgesehenen Flüssigkeit.

8. Verfahren nach einem der Ansprüche 1 bis 7, wobei die Flüssigkeit eine alkoholhaltige Flüssigkeit, wie etwa Wein, Fruchtwein, oder ein anderes aus dem Saft von Weintrauben oder Früchten herstellbares Getränk, oder Schnaps, Whisky, Bier oder ein Mischgetränk ist.

9. Verwendung eines Flüssigkeitsbehälter (10), der zur Herstellung und/oder Lagerung von zum Trinkkonsum vorgesehenen Flüssigkeiten vorgesehen ist, der einen an einer Seite offenen Behälter (12) mit einer Behälterwandung (14) mit einer Innenwandoberfläche (16) umfasst, wobei die Innenwandoberfläche (16) zumindest teilweise als eine Oberfläche eines massiven Natursteins (18) ausgebildet ist, in einem Verfahren zum Herstellen und/oder Lagern einer zum Trinkkonsum vorgesehenen Flüssigkeit nach einem der Ansprüche 1 bis 8.

10. Verwendung nach Anspruch 9, wobei die Flüssigkeit eine alkoholhaltige Flüssigkeit, wie etwa Wein, Fruchtwein, oder ein anderes aus dem Saft von Weintrauben oder Früchten herstellbares Getränk, oder Schnaps, Whisky, Bier oder ein Mischgetränk ist.

11. Flüssigkeitsbehälter (10) zur Herstellung und/oder Lagerung von zum Trinkkonsum vorgesehenen, insbesondere alkoholhaltigen, Flüssigkeiten,
wobei der Flüssigkeitsbehälter (10) einen an einer Seite offenen Behälter (12) mit einer Behälterwandung (14) mit einer Innenwandoberfläche (16) umfasst, wobei die Innenwandoberfläche (16) zumindest teilweise, insbesondere im Wesentlichen vollständig, als eine Oberfläche eines massiven Natursteins (18) ausgebildet ist, und
wobei der Flüssigkeitsbehälter (10) in einem Verfahren nach einem der Ansprüche 1 bis 8 verwendet wird.

12. Flüssigkeitsbehälter (10) nach Anspruch 11, wobei zumindest ein Abschnitt der Innenwandoberfläche (16) zunächst mittels Spalten oder Bohren oder Sägen des Natursteins oder der Naturstein mit einem Sandstrahl behandelt worden ist und infolgedessen eine erste Rauigkeit aufgewiesen hat, und anschließend einer Oberflächenbehandlung unterzogen worden ist, die bewirkt hat, dass die Rauigkeit der behandelten Innenwandoberfläche (16) in Bezug zu der zunächst mittels Spalten oder Sägen oder Bohren oder der Behandlung mit dem Sandstrahl hergestellten ersten Rauigkeit vergrößert worden ist.

13. Flüssigkeitsbehälter (10) nach Anspruch 11 oder 12, wobei die Innenwandoberfläche (16) eine durch Ausführen eines Oberflächenbearbeitungsschritts gestockte, scharrierte, gespitzte und/oder geflammte Oberfläche, umfasst.

14. Flüssigkeitsbehälter nach einem der Ansprüche 11 bis 13, wobei der Naturstein (18) Granit oder Basalt und insbesondere kein kalkreicher Naturstein, wie etwa Marmor, ist.
